# EUROPEAN PATENT APPLICATION

(11) **EP 4 844 667 A1**
(43) Date of publication of application: **25.11.2026**
(21) Application number: 26169374.1
(22) Date of filing: 31.03.2026
(51) Int. Cl.: G06Q 50/40, B61L 27/12, B61L 27/16, G06N 3/0464, G06Q 10/0639

(54) **METHOD AND APPARATUS FOR EVALUATING AND OPTIMIZING TRANSPORTATION EFFECTIVENESS OF HIGH-SPEED TRAIN OPERATION PLAN, ELECTRONIC DEVICE AND STORAGE MEDIUM**

(30) Priority: 19.05.2025 CN 202510645646
(71) Applicant: Institute of Computing Technologies of China Academy of Railway Sciences Group Co., Ltd., Beijing 100081 (CN); China Academy of Railway Sciences Group Co., Ltd., Beijing 100081 (CN); Beijing Jingwei Information Technologies Co., Ltd., Beijing 100081 (CN)
(72) Inventor: ZHAO, Shuo, Beijing, 100081 (CN); SHAN, Xinghua, Beijing, 100081 (CN); WU, Jinfei, Beijing, 100081 (CN); LV, Xiaoyan, Beijing, 100081 (CN); ZHANG, Junfeng, Beijing, 100081 (CN); ZANG, Guangzhi, Beijing, 100081 (CN); LIU, Min, Beijing, 100081 (CN); ZHAO, Xiang, Beijing, 100081 (CN); ZHANG, Litao, Beijing, 100081 (CN); LIU, Xuying, Beijing, 100081 (CN); LI, Zhenyi, Beijing, 100081 (CN); MAO, Zijin, Beijing, 100081 (CN); AI, Qingao, Beijing, 100081 (CN)
(74) Representative: Di Bernardo, Antonio

(57) **Abstract**

The present disclosure provides a method and an apparatus for evaluating and optimizing transportation effectiveness of a high-speed train operation plan, an electronic device, and a storage medium. The method includes: acquiring the high-speed train operation plan and a load factor of each train; and determining an optimized train operation plan and a transportation effectiveness evaluation value of the optimized train operation plan through an evaluation model according to the high-speed train operation plan and the load factor of each train, The evaluation model includes a two-dimensional wavelet packet decomposition module and a convolutional neural network. A decomposition function of the two-dimensional wavelet packet decomposition module is Daubechies4, and the two-dimensional wavelet packet decomposition module is configured to convert feature vectors of all trains in the train operation plan into multi-channel data. The convolutional neural network is configured to perform transportation effectiveness evaluation based on the multi-channel data and the load factors of each train. According to the method, the transportation effectiveness can be accurately evaluated according to the high-speed train operation plan and the load factor of each train, and the optimized train operation plan is obtained, thereby achieving automatic optimization of transportation effectiveness evaluation of the high-speed train operation plan, and thus improving the optimization efficiency and accuracy.

## Description

### TECHNICAL FIELD

The present disclosure relates to the field of rail transit technologies, and in particular, to a method and an apparatus for evaluating and optimizing transportation effectiveness of a high-speed train operation plan, an electronic device and a storage medium.

### BACKGROUND

In an operation-organization planning system of high-speed railway, train operation plan design is a key link for balancing supply and demand. The optimization design of a train operation plan needs to match travel patterns of passengers and improve railway transportation service quality, while fully utilizing transport capacity resources to improve the utilization rate of railway network capability. Such adjustment and optimization is a complex systematic work.

In previous research on train operation plan optimization, relevant optimization methods of the train operation plan can be classified into three categories including: comprehensive optimization of route design and frequency configuration, comprehensive optimization of station stop planning and frequency configuration, and comprehensive optimization of route design, frequency configuration, and station stop planning. In order to evaluate a matching degree between transport capacity allocation and travel demand, passenger flow assignment is incorporated into a train operation plan optimization process to evaluate an operation effect of the train operation plan. However, since the travel selection behavior and influencing factors of passenger flow demand are relatively complex, a conventional passenger flow assignment process is difficult to accurately represent passenger travel path selection and train passenger flow distribution. In an actual transportation organization process, the train transport capacity utilization is generally estimated based on manual experience and train pre-sale conditions.

Such an approach has low efficiency and insufficient accuracy.

### SUMMARY

In order to solve one of the above technical defects, embodiments of the present disclosure provide a method and an apparatus for evaluating and optimizing transportation effectiveness of a high-speed train operation plan, an electronic device and a storage medium.

In a first aspect, embodiments of the present disclosure provide a method for evaluating and optimizing transportation effectiveness of a high-speed train operation plan, including: acquiring the high-speed train operation plan and a load factor of each train; and determining an optimized train operation plan and a transportation effectiveness evaluation value of the optimized train operation plan through an evaluation model according to the high-speed train operation plan and the load factor of each train. The evaluation model includes a two-dimensional wavelet packet decomposition module and a convolutional neural network. A decomposition function of the two-dimensional wavelet packet decomposition module is Daubechies4, and the two-dimensional wavelet packet decomposition module is configured to convert feature vectors of all trains in the train operation plan into multi-channel data. The convolutional neural network is configured to perform transportation effectiveness evaluation based on the multi-channel data and the load factors of each train. The convolutional neural network is trained based on a plurality of historical train operation plans and load factors of trains thereof to construct a mapping relationship for performing transportation effectiveness evaluation.

In a second aspect, embodiments of the present disclosure provide an apparatus for evaluating and optimizing transportation effectiveness of a high-speed train operation plan, including: an acquisition module configured to acquire the high-speed train operation plan and a load factor of each train; and an optimization module, configured to determine an optimized train operation plan and a transportation effectiveness evaluation value of the optimized train operation plan through an evaluation model according to the high-speed train operation plan and the load factor of each train. The evaluation model includes a two-dimensional wavelet packet decomposition module and a convolutional neural network. A decomposition function of the two-dimensional wavelet packet decomposition module is Daubechies4, and the two-dimensional wavelet packet decomposition module is configured to convert feature vectors of all trains in the train operation plan into multi-channel data. The convolutional neural network is configured to perform transportation effectiveness evaluation based on the multi-channel data and the load factors of each train. The convolutional neural network is trained based on a plurality of historical train operation plans and load factors of trains thereof to construct a mapping relationship for performing transportation effectiveness evaluation.

In a third aspect, embodiments of the present disclosure provide an electronic device, including: a memory; a processor; and a computer program. The computer program is stored in the memory and configured to be executed by the processor to implement the method according to the first aspect.

In a fourth aspect, embodiments of the present disclosure provide a computer-readable storage medium on which a computer program is stored. The computer program, when executed by a processor, is configured to implement the method according to the first aspect.

Embodiments of the present disclosure provide a method and an apparatus for evaluating and optimizing the transportation effectiveness of the high-speed train operation plan, an electronic device, and a storage medium, and the method includes: acquiring the high-speed train operation plan and a load factor of each train; and determining an optimized train operation plan and a transportation effectiveness evaluation value of the optimized train operation plan through an evaluation model according to the high-speed train operation plan and the load factor of each train. The evaluation model includes a two-dimensional wavelet packet decomposition module and a convolutional neural network. A decomposition function of the two-dimensional wavelet packet decomposition module is Daubechies4, and the two-dimensional wavelet packet decomposition module is configured to convert feature vectors of all trains in the train operation plan into multi-channel data. The convolutional neural network is configured to perform transportation effectiveness evaluation based on the multi-channel data and the load factors of each train. The convolutional neural network is trained based on a plurality of historical train operation plans and load factors of trains thereof to construct a mapping relationship for performing transportation effectiveness evaluation. According to the method of the present disclosure, the transportation effectiveness can be accurately evaluated according to the high-speed train operation plan and the load factor of each train, and the optimized train operation plan is further obtained, thereby achieving automatic optimization of transportation effectiveness evaluation of the high-speed train operation plan, and thus improving the optimization efficiency and accuracy.

### BRIEF DESCRIPTION OF DRAWINGS

The drawings described herein are used for providing further understanding of the present disclosure, which constitute a part of the present disclosure. The exemplary embodiments and description are used to explain the present disclosure, which do not constitute any improper limitation to the present disclosure. In the drawings:
FIG. 1 is a schematic flowchart of a method for evaluating and optimizing transportation effectiveness of a high-speed train operation plan according to an embodiment of the present disclosure;
FIG. 2 is a schematic diagram of a principle of an evaluation model according to an embodiment of the present disclosure;
FIG. 3 is a schematic diagram of the partitioning of a railway network according to an embodiment of the present disclosure;
FIG. 4 is a schematic structural diagram of an apparatus for evaluating and optimizing transportation effectiveness of a high-speed train operation plan according to an embodiment of the present disclosure; and
FIG.5 is a schematic structural diagram of an electronic device according to an embodiment of the present disclosure.

### DESCRIPTION OF EMBODIMENTS

In order to make the technical solutions and advantages in embodiments of the present disclosure clearer, the exemplary embodiments of the present disclosure are described in further detail below with reference to the drawings. It is appreciated that, the described embodiments are merely some embodiments of the present disclosure, and are not exhaustive of all embodiments. It should be noted that the embodiments of the present disclosure and features in the embodiments may be combined with each other, unless conflict occurs.

During a process of implementing the present disclosure, it has been found by the inventor that, in previous research on train operation plan optimization, relevant optimization methods of the train operation plan can be classified into three categories including: comprehensive optimization of route design and frequency configuration, comprehensive optimization of station stop planning and frequency configuration, and comprehensive optimization of route design, frequency configuration, and station stop planning. In order to evaluate a matching degree between transport capacity allocation and travel demand, passenger flow assignment is incorporated into a train operation plan optimization process to evaluate an operation effect of the train operation plan. However, since the travel selection behavior and influencing factors of passenger flow demand are relatively complex, a conventional passenger flow assignment process is difficult to accurately represent passenger travel path selection and train passenger flow distribution. In an actual transportation organization process, the train transport capacity utilization is generally estimated based on manual experience and train pre-sale conditions. Such an approach has low efficiency and insufficient accuracy.

In view of the above technical problems, embodiments of the present disclosure provide a method and an apparatus for evaluating and optimizing transportation effectiveness of a high-speed train operation plan, an electronic device, and a storage medium. The method includes: the high-speed train operation plan and a load factor of each train are acquired. An optimized train operation plan and a transportation effectiveness evaluation value of the optimized train operation plan are determined by an evaluation model according to the high-speed train operation plan and the load factor of each train. The evaluation model includes a two-dimensional wavelet packet decomposition module and a convolutional neural network. A decomposition function of the two-dimensional wavelet packet decomposition module is Daubechies4, and the two-dimensional wavelet packet decomposition module is configured to convert feature vectors of all trains in the train operation plan into multi-channel data. The convolutional neural network is configured to perform transportation effectiveness evaluation based on the multi-channel data and the load factors of each train. The convolutional neural network is trained based on a plurality of historical train operation plans and load factors of trains thereof to construct a mapping relationship for performing transportation effectiveness evaluation. According to the method of the present disclosure, the transportation effectiveness can be accurately evaluated according to the high-speed train operation plan and the load factor of each train, and the optimized train operation plan is further obtained, thereby achieving automatic optimization of transportation effectiveness evaluation of the high-speed train operation plan, and thus improving the optimization efficiency and accuracy.

In order to accurately evaluate the transportation effectiveness of the train operation plan and to improve the supply-demand matching degree and the utilization rate of transport capacity resources, the embodiments of the present disclosure provide a method for evaluating and optimizing transportation effectiveness of a high-speed train operation plan. The method designs a comprehensive multi-dimensional transportation effectiveness evaluation index system for railway supply-demand efficiency and benefits, and mines mapping associations between train characteristics and transportation effectiveness in the train operation plan based on historical operation big data, so as to accurately pre-estimate the train operation plan.

### 1. Transportation effectiveness evaluation index system

Since the optimization design of the train operation plan needs to consider the benefits of both aspects of railway supply and demand, and there is a mutual coordination and restriction relationship there between, the evaluation of the transportation effectiveness of the train operation plan needs to construct the user transportation effectiveness evaluation index system shown in Table 1 from the two aspects of supply and demand.

**Table 1**

| Evaluation Category | Evaluation Index |
|---|---|
| Service Level | Passenger volume, service frequency, O-D coverage degree, direct-transfer ratio, etc. |
| Operation Efficiency | Transport capacity allocation, running distance, number of rolling stocks, load factor, speed coefficient, operation benefit, etc. |
| Capacity Utilization | Number of trains passing through sections, number of trains starting and ending at stations, section capacity utilization rate, etc. |

(1) Service level evaluation is to evaluate the quality of service of a train provided to passengers. The evaluation indexes are mainly designed from aspects such as accessibility and convenience, mainly including passenger starting and ending volume, service frequency, O-D coverage degree, direct-transfer ratio, etc., so as to measure the travel quality of passengers.
(2) Operation efficiency evaluation is to evaluate the operation efficiency and transport capacity utilization of train operation from the perspective of railway operation enterprises, mainly including transport capacity allocation, running distance, number of rolling stocks, load factor, speed coefficient, operation benefit, etc., so as to measure the transportation organization efficiency of the train operation plan.
(3) Capacity utilization is to evaluate the resource utilization rate of the train operation plan from the perspective of railway network transport capacity resources, mainly including number of trains passing through sections, number of trains starting and ending at stations, section capacity utilization rate, etc.

In order to take into account the efficiency and benefits of both aspects of railway supply and demand, the train load factor is selected as the main index of the transportation effectiveness evaluation. The higher the train load factor is, the higher the supply-demand matching degree, and the better the transport capacity allocation effect are obtained.

### 2. Features of trains in the train operation plan

If the railway network is *G* = (*V*,*E*), the train operation plan is *L =* {*l* = (*Vₗ*,*Sₗ*,*Cₗ,Dₗ*)}.

*V* is a station set of the railway network, and *E* is a section set of the railway network.

*l* is a train identifier, and *l* ∈ *L.*

*h*(*l*) is the total number of stations passed by train *l*, *Vₗ* is a set of stations passed by train *l,* ${V}_{l} = \left({v}_{1}^{l}, {v}_{2}^{l}, ⋯, {v}_{h \left(l\right)}^{l}\right)$*,* where ${v}_{1}^{l}$ is the first station along the route of train *l* in the train operation plan, ${v}_{2}^{l}$ is the second station along the route of train *l* in the train operation plan, and ${v}_{h \left(l\right)}^{l}$ is the *h*(*l*)-th station along the route of train *l* in the train operation plan.

*Sₗ* is a stop symbol set of the *h*(*l*)-th stations passed by train *l,* and ${S}_{l} = \left({x}_{1}^{l}, {x}_{2}^{l}, ⋯, {x}_{h \left(l\right)}^{l}\right)$ *.* If train *l* stops at the first station, ${x}_{1}^{l} = 1$, otherwise ${x}_{1}^{l} = 0$. If train *l* stops at the second station, ${x}_{2}^{l} = 1$, otherwise ${x}_{2}^{l} = 0$. .... If train *l* stops at the *h*(*l*)-th station, ${x}_{h \left(l\right)}^{l} = 1$, otherwise ${x}_{h \left(l\right)}^{l} = 0$.

*Cₗ* is the capacity of train *l*, and *Dₗ* is the departure time of train *l*.

The features of the train in the train operation plan include:

### (1) Operation route X₁(l)

Since each train may has a different operation route, in order to ensure the consistency of dimensions, stations of the railway network are sorted. If the train passes through the station, a value of 1 is recorded, otherwise a value of 0 is recorded.

### (2) Stop identifier X₂(l)

Similarly, for the sorted stations of the railway network, if the train stops at the station, a value of 1 is recorded, otherwise a value of 0 is recorded.

### (3) Train capacity X₃(l)

Since capacities of different train types differ significantly, for standardized processing, the maximum capacity among all train types is set as *Cₘₐₓ*, and the capacity of train *l* is converted into *Cₗ*/*Cₘₐₓ*, which is a normalized value in [0, 1].

### (4) Departure time X₄(l)

The processing of departure time is to convert the departure time into the proportion of the whole day period, namely *Dₗ*/1440, which is a standardized value of [0,1].

Accordingly, the feature vector of train *l* is expressed as $\left(\begin{matrix}{X}_{1} \left(l\right) \\ {X}_{2} \left(l\right) \\ {X}_{3} \left(l\right) \\ {X}_{4} \left(l\right)\end{matrix}\right)$, and the feature vectors of all trains in the train operation plan are expressed as $X = \left[\begin{matrix}{X}_{1} \left(1\right) & {X}_{1} \left(2\right) & ⋯ & {X}_{1} \left(l\right) & ⋯ & {X}_{1} \left(\left|L\right|\right) \\ {X}_{2} \left(1\right) & {X}_{2} \left(2\right) & ⋯ & {X}_{2} \left(l\right) & ⋯ & {X}_{2} \left(\left|L\right|\right) \\ {X}_{3} \left(1\right) & {X}_{3} \left(2\right) & ⋯ & {X}_{3} \left(l\right) & ⋯ & {X}_{3} \left(\left|L\right|\right) \\ {X}_{4} \left(1\right) & {X}_{4} \left(2\right) & ⋯ & {X}_{4} \left(l\right) & ⋯ & {X}_{4} \left(\left|L\right|\right)\end{matrix}\right]$ , where |*L*| is the total number of trains in the train operation plan *L*.

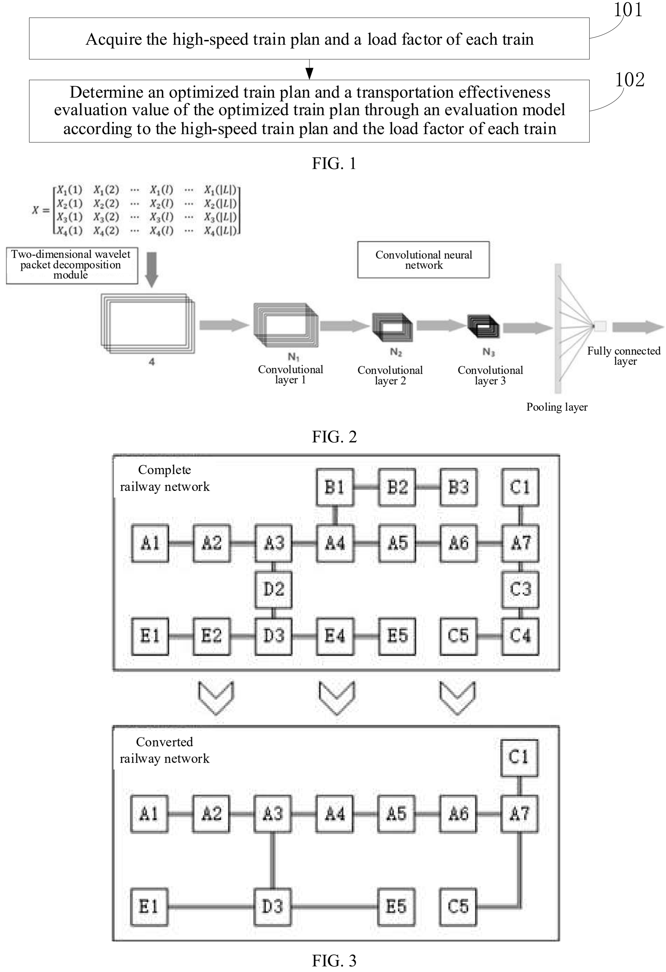

Based on this, referring to FIG. 1, the implementation process of the method for evaluating and optimizing the transportation effectiveness of the high-speed train operation plan according to the embodiments of the present disclosure is as follows:

101, The high-speed train operation plan and a load factor of each train are acquired.

102, An optimized train operation plan and a transportation effectiveness evaluation value of the optimized train operation plan are determined by an evaluation model according to the high-speed train operation plan and the load factor of each train.

The evaluation model includes a two-dimensional wavelet packet decomposition module and a convolutional neural network.

### 1. Two-dimensional wavelet packet decomposition module

A decomposition function of the two-dimensional wavelet packet decomposition module is Daubechies4, and the two-dimensional wavelet packet decomposition module is configured to implement a wavelet packet decomposition process, that is, the two-dimensional wavelet packet decomposition module is configured to convert the feature vectors of all trains in the train operation plan into multi-channel data.

For example, when implementing the wavelet packet decomposition process, the two-dimensional wavelet packet decomposition module reduces the instability of an original signal by decomposing the original signal into several sub-signals. The principle of wavelet packet decomposition is a spatial decomposition principle of multi-resolution analysis. That is, a space is decomposed into a plurality of wavelet packet subspaces according to a spatial scale factor. In addition, frequency subdivision is performed on a low-frequency subspace (scale space) and a high-frequency subspace (detail space), so that time-frequency resolution of both low-frequency and high-frequency bands is improved, and frequency-domain localization information better than that of wavelet decomposition is obtained.

The two-dimensional wavelet packet decomposition module includes two decomposition layers, and can convert the input feature vectors of all trains of the train operation plan into multi-channel data *X*(*L*)*.* The two-dimensional wavelet packet decomposition module selects the function Daubechies4 as a decomposition function of wavelet packet decomposition, and the decomposed two-dimensional multi-channel data can be used as the input of the convolutional neural network.

### 2. Convolutional Neural Network

The convolutional neural network is configured to perform transportation effectiveness evaluation based on the multi-channel data and the load factors of each train.

The convolutional neural network is trained based on a plurality of historical train operation plans and load factors of trains thereof to construct a mapping relationship for performing transportation effectiveness evaluation.

The convolutional neural network is a type of feedforward neural network including convolution computation and having a deep structure, and can learn multi-dimensional data. The convolutional neural network includes an input layer, a hidden layer, and an output layer. The hidden layer mainly includes two types of feature extraction layers, namely a convolutional layer and a sampling layer (or pooling layer), and a fully connected layer.

Based on the two-dimensional multi-channel data decomposed and generated by the two-dimensional wavelet packet decomposition module in the evaluation model, the convolutional neural network in the evaluation model has three convolutional layers, each convolutional layer having a 3×3 convolution kernel, the channel numbers being respectively *N*₁, *N*₂, and *N*₃, and an activation function being a rectified linear unit. Average pooling is adopted as a pooling function, and the last layer of the network is a fully connected layer. A loss function and an optimization function of the convolutional neural network are respectively a mean square error and an Adam algorithm.

That is, the convolutional neural network includes: an input layer, a hidden layer, and an output layer.

The hidden layer includes: a convolutional layer, a pooling layer, and a fully connected layer.

The convolution layer includes three convolution layers, each convolution layer has a 3×3 convolution kernel, and an activation function is a rectified linear unit.

A pooling function of the pooling layer is an average pooling function.

A loss function of the convolutional neural network is a mean square error function, and an optimization function is an Adam algorithm.

In addition, in order to maximize the transportation effectiveness of the train operation plan, the convolutional neural network adopts the overall load factor level of the train operation plan as an optimization objective during the transportation effectiveness evaluation. Based on the evaluation load factor of the operating trains *Y =* (*LF*₁,*LF*₂,···,*LFₗ*,···,*LF*_{|*L*|})*^{T}*, the overall load factor level of the train operation plan is calculated as: $\overline{LF} = {\sum }_{l ∈ L} {\sum }_{i = 1}^{h \left(l\right) - 1} {C}_{l} ⋅ {m}_{{e}_{li}} ⋅ {LF}_{l} / {\sum }_{l ∈ L} {\sum }_{i = 1}^{h \left(l\right) - 1} {C}_{l} {m}_{{e}_{li}}$ . Since the transportation effectiveness is maximization-oriented, in order to adapt to the minimization-oriented objective in the train operation plan optimization model, the adjustment and optimization objective of the train operation plan is adjusted. Therefore, an objective function during transportation effectiveness evaluation is: $min Z \left(L\right) = 1 - {\sum }_{l ∈ L} {\sum }_{i = 1}^{h \left(l\right) - 1} {C}_{l} ⋅ {m}_{{e}_{li}} ⋅ {LF}_{l} / {\sum }_{l ∈ L} {\sum }_{i = 1}^{h \left(l\right) - 1} {C}_{l} {m}_{{e}_{li}}$, where *l* is a train identifier, *L* is the train operation plan, *Z*(*L*) is an objective value of *L*, *h*(*l*) is a total number of stations passed by train *l*, *i* is a station identifier passed by train *l*, 1 ≤ *i < h*(*l*), *Cₗ* is a capacity of train *l*, *m_{eₗᵢ}* is a mileage of a section *eₗᵢ*, e is a section identifier, *eₗᵢ* is a section of train *l* corresponding to an i-th station, ${e}_{li} = \left({v}_{i}^{l}, {v}_{i + 1}^{l}\right)$*, v* is a station identifier, ${v}_{i}^{l}$ is an i-th station along an operation route of train *l* in the train operation plan, ${v}_{i + 1}^{l}$ is an (i+1)-th station along the operation route of train *l* in the train operation plan, and *LFₗ* is the load factor of train *l*.

Constraint conditions during the train operation plan optimization include: a capacity allocation constraint, a section throughput capacity constraint, a station starting and ending train number constraint, a base timetable constraint, a starting and ending time constraint, a train capacity constraint, and a service frequency constraint.

### 1) Capacity allocation constraint

The upper limit of capacity allocation of the railway network is represented by train kilometers. An accounting coefficient *ηₗ* of train kilometers is determined according to formation capacity of each train *l* ∈ *L.* If train *l* is a single-unit train, *ηₗ* = 1; otherwise, 1 < *ηₗ* < 2. Accordingly, the capacity allocation constraint is: ${\sum }_{l ∈ L} {\sum }_{i = 1}^{h \left(l\right) - 1} {m}_{{e}_{li}} {η}_{l} \leq TD$*,* where *ηᵢ* is the accounting coefficient of kilometers of train *l*, and *TD* is the upper limit of capacity allocation of the railway network (that is, the upper limit of disposable electric multiple unit (EMU) kilometers of the railway network).

### 2) Section throughput capacity constraint

Affected by railway operation safety factors, the number of trains passing through section *e* ∈ *E* in a unit time (every day or every hour) is required to satisfy a corresponding throughput capacity limit. The number of trains entering section *e* in the whole day is denoted as *NTₑ,* then the section throughput capacity constraint is: *NTₑ* ≤ *TCₑ*, where *e* ∈ *E*, *E* is the section set of the railway network, *NTₑ* is the number of trains entering section e in the whole day, and *TCₑ* is the upper limit of throughput capacity of section *e*.

### 3) Station starting and ending train number constraint

The starting and ending capacity of a station is affected by multiple factors such as station level, technical operation property, the number of station starting-ending lines, and the distribution of EMU depots (sections). During designing of the train operation plan, the number of starting and ending trains of each station is required not to exceed the upper limit of the starting and ending train capacity. The number of departure trains of station *v* ∈ *V* is equal to $\left|\left\{\left.l∈L\right|v={v}_{1}^{l}\right\}\right|$, and the number of ending trains is equal to $\left|\left\{\left.l∈L\right|v={v}_{h \left(l\right)}^{l}\right\}\right|$, which must respectively satisfy the constraint of the starting and ending capacity *Cᵥ*, i.e., the station starting and ending train number constraint is: $\left|\left\{\left.l∈L\right|v={v}_{1}^{l}\right\}\right| \leq {TC}_{v}$, and $\left|\left\{\left.l∈L\right|v={v}_{h \left(l\right)}^{l}\right\}\right| \leq {TC}_{v}$, where v ∈ *V*, *V* is the station set of the railway network, ${v}_{1}^{l}$ is the first station along an operation route of train *l* in the train operation plan, ${v}_{h \left(l\right)}^{l}$ is the *h*(*l*)-th station along the operation route of train *l* in the train operation plan, and *TCᵥ* is an upper limit of starting and ending capacity of station *v*.

If station *v* is incapable of starting or ending trains, *TCᵥ =* 0.

### 4) Base timetable constraint

The operating trains in the train operation plan are required to be selected from candidate trains in the base timetable within a timetable period, so the base timetable constraint is: *l* ∈ *L̅*, where *L̅* is the train set of the base timetable, and *l* ∈ *L.*

### 5) Starting and ending time constraint

The starting and ending time of a train shall be within an operation period. Assuming that the whole day operation period is [*t*₁,*t*₂], the starting and ending time constraint is: *t*₁ ≤ *Dₗ*, ${a}_{h \left(l\right)}^{l} \leq {t}_{2}$, where *t*₁ is the start time of the whole-day operation period, *t*₂ is the end time of the whole-day operation period, *l* ∈ *L*, *Dₗ* is the departure time of train *l*, and ${a}_{h \left(l\right)}^{l}$ is the arrival time of train *l* at the *h*(*l*)-th station.

If a running time of train *l* on section ${e}_{li} = \left({v}_{i}^{l}, {v}_{i + 1}^{l}\right)$, is given as ${t}_{{e}_{li}}^{run}$, and a sum of start-stop additional time and stop time at station v ∈ *V* is given as ${t}_{v}^{stop}$, an arrival time ${a}_{i}^{l} ,$ and a departure time ${d}_{i}^{l}$ of train *l* at stations along the route are determined.

*i*' is a station identifier, and 1 < *i*' ≤ *h*(*l*).

### 6) Train capacity constraint

A train type selected for operating trains in the train operation plan is required to satisfy actually equipped EMU train types, so the train formation is required to satisfy a feasible capacity set of equipped train types, that is, the train capacity constraint is: *Cₗ* ∈ *C̅*, where *C̅* is the capacity set of equipped train types, and *l* ∈ *L.*

### 7) Service frequency constraint

In order to satisfy travel demand of passenger flow starting and ending at a station, the service at each station is required to satisfy a certain service level, that is, the lower limit of service frequency is required to be satisfied. Therefore, the stop frequency at each station is required to satisfy the lower limit constraint, and the service frequency constraint is: ${\sum }_{l ∈ L} {σ}_{v}^{l} \geq {n}_{v}^{0}$ *,* where ${n}_{v}^{0}$ is the lower limit of service frequency of station *v*, ${σ}_{v}^{l}$ is the association identifier between train *l* and station v, and ${σ}_{v}^{l} = 1$ when train *l* stops at station *v*, otherwise ${σ}_{v}^{l} = 0$.

When performing step 102, the feature vectors of all trains in the train operation plan are represented as a two-dimensional matrix, namely $X = \left[\begin{matrix}{X}_{1} \left(1\right) & {X}_{1} \left(2\right) & ⋯ & {X}_{1} \left(l\right) & ⋯ & {X}_{1} \left(\left|L\right|\right) \\ {X}_{2} \left(1\right) & {X}_{2} \left(2\right) & ⋯ & {X}_{2} \left(l\right) & ⋯ & {X}_{2} \left(\left|L\right|\right) \\ {X}_{3} \left(1\right) & {X}_{3} \left(2\right) & ⋯ & {X}_{3} \left(l\right) & ⋯ & {X}_{3} \left(\left|L\right|\right) \\ {X}_{4} \left(1\right) & {X}_{4} \left(2\right) & ⋯ & {X}_{4} \left(l\right) & ⋯ & {X}_{4} \left(\left|L\right|\right)\end{matrix}\right]$ , and load factors of all trains are represented as one-dimensional label vectors namely *Y =* (*LF*₁,*LF*₂,···,*LFₗ*,···,*LF*_{|*L*|})*^{T}.* In step 102, referring to FIG. 2, based on the feature vectors of all trains of the train operation plan, the multi-channel data is generated by converting the feature vectors through a two-dimensional wavelet packet decomposition process of the two-dimensional wavelet packet decomposition module in the evaluation model. For the decomposed data, mapping training between train operation plan operation elements and train load factors is performed using the convolutional neural network in the evaluation model, so that the transportation effectiveness of the train operation plan is evaluated, so as to obtain an efficiency evaluation value of the train operation plan. Finally, the optimized train operation plan and the transportation effectiveness evaluation value thereof are determined based on the efficiency evaluation value.

It should be noted that the implementation process of step 102 is described above in principle. The train operation plan is a generic concept. Depending on specific conditions during execution, the train operation plan may be a prictical operation plan, or a neighborhood train operation plan, or another specific train operation plan. That is, the two-dimensional wavelet packet decomposition module in the evaluation model processes the train operation plan without limiting the specific type of the train operation plan to be processed. According to implementation requirements, an accurate train operation plan is input into the two-dimensional wavelet packet decomposition module in the evaluation model.

In specific implementation, the details of step 102 are as follows:
102-1, The feature vectors of all trains of the high-speed train operation plan are converted into multi-channel data *X*(*L*₀) by the two-dimensional wavelet packet decomposition module, where *L*₀ is the high-speed train operation plan.

That is, the high-speed train operation plan *L*₀ is input into the two-dimensional wavelet packet decomposition module in the evaluation model, and feature vectors of all trains in *L*₀ are converted into the multi-channel data *X*(*L*₀) by the two-dimensional wavelet packet decomposition module.

102-2, The transportation effectiveness pre-evaluation is performed by the convolutional neural network based on *X*(*L*₀) and the load factor of each train, to obtain an efficiency evaluation value *Z*(*L*₀). The current solution is set as *L*' = *L*₀, the objective value of the current solution is set as *Z*(*L*') = *Z*(*L*₀)*,* the optimal solution is set as *L*^{*} = *L*₀, the objective value of the optimal solution is set as *Z*(*L*^{*}) = *Z*(*L*₀), the iteration number is set as *n*₀ = 1, and the current temperature is set as *t*₀ *= T*₀, where *T*₀ is the preset initial temperature.

For example, the efficiency evaluation value *Z*(*L*₀) is obtained by using an objective function $min Z \left({L}_{0}\right) = 1 - {\sum }_{l ∈ {L}_{0}} {\sum }_{i = 1}^{h \left(l\right) - 1} {C}_{l} ⋅ {m}_{{e}_{li}} ⋅ {LF}_{l} / {\sum }_{l ∈ {L}_{0}} {\sum }_{i = 1}^{h \left(l\right) - 1} {C}_{l} {m}_{{e}_{li}}$.

102-3, The neighborhood train operation plan is constructed according to *L*'.

In step 102-3, the target train in *L*' is processed as follows, to obtain the neighborhood train operation plan:

### (a) Deleting operation of trains

A first target train in *L*' is deleted.

The first target train is the single-unit train, and has the load factor lower than α₁, and *α*₁ is a preset first ratio value, such as α₁ = 25%.

That is, for the single-unit train in the current solution *L*', if the load factor is lower than *α*₁ (for example, 25%), the train is deleted.

### (b) Changing train capacity

1. A second target train in *L*' is adjusted to a long-formation train having the smaller capacity with the probability of *β*₁.
   *β*₁ is the preset first probability value, such as *β*₁ = 0.7. The second target train is a long-formation train or a coupled train, and has load factors within [α₂, α₃], where α₂ is a preset second ratio value, α₃ is a preset third ratio value, and α₂ < α₃, such as α₂ = 40% and α₃ = 60%.
2. A third target train in *L*' is adjusted to a single-unit train with a probability of *β*₂.

*β*₂ is the preset second probability value, *β*₂ > *β*₁, such as *β*₂ = 0.9. The third target train is a long-formation train or a coupled train, and has load factors all lower than *α*₂.

That is, for the long-formation train or the coupled train in the current solution *L*', if the load factor is within a relatively low range [α₂, α₃] (such as [40%, 60%]), adjustment to a long-formation train having a smaller capacity is performed with the probability β₁ (such as 0.7). If the load factor is lower than a threshold α₂ (such as 40%), adjustment to the single-unit train is performed with a probability β₂ (such as 0.9).

### (c) Adding trains

For the long-formation train/the coupled train with a load factor higher than a certain threshold or the short-formation train incapable of performing formation increase, it is checked whether a peak line train pair exists that is close to the high-utilization section of the train at an adjacent time point in the base timetable (an independent peak line requires adding the entire routing). If so, a corresponding train is added.

Accordingly, a train corresponding to the fourth target train in *L*' is added.

The fourth target train is a long-formation train, a coupled train, or a short-formation train that is incapable of performing formation increase, and has a load factor higher than α₄, where α₄ is a preset fourth ratio value. In addition, a peak line train pair corresponding to the high utilization section of the fourth target train exists at the adjacent time point in the base timetable.

The added train corresponding to the fourth target train is a train corresponding to the peak line train pair in the base timetable at the adjacent time point.

### (d) Adjusting stops

For station v, if the lower limit constraint of service frequency is to be satisfied, under the principle that stop distribution of trains at the station satisfies spatio-temporal uniformity, and on a premise that no operation conflict is generated, a train having a relatively low stop rate is selected for adding stops, and intermediate arrival and departure times are updated.

Accordingly, the intermediate arrival and departure times of a fifth target train in *L*' are adjusted.

The intermediate stations of the fifth target train include a target station, and the target station satisfies the service frequency constraint.

The service frequency constraint is: ${\sum }_{l ∈ L} {σ}_{v}^{l} \geq {n}_{v}^{0}$*,* where *l* is a train identifier, *L* is a train operation plan, ${n}_{v}^{0}$ is the lower limit of service frequency of station *v*, ${σ}_{v}^{l}$ is the association identifier between train *l* and station *v*, ${σ}_{v}^{l} = 1$ when train *l* stops at station *v*, and ${σ}_{v}^{l} = 0$ when train *l* does not stop at station v.

### (e) Adjusting operation section

For a train having a relatively low load factor, according to the origin and destination adjacent to the starting and ending stations and the capacity constraint of the section, the origin and destination for the extended section are determined, and the operation section of the train is adjusted.

Accordingly, the operation section of a sixth target train in *L*' is adjusted according to the section throughput capacity constraint.

The sixth target train has the load factor lower than *α*₅, and *α*₅ is a preset fifth ratio value.

The section throughput capacity constraint is: *NTₑ* ≤ *TCₑ*, where *e* is a section identifier, *e* ∈ *E, E* is the section set of the railway network, *NTₑ* is the number of trains entering section *e* in the whole day, and *TCₑ* is the upper limit of throughput capacity of section *e*.

It should be noted that, the relationships among *α*₁, *α*₂, *α*₄, and *α*₅ are not limited in the embodiments, and values thereof may be completely the same, partially the same, or completely different. Similarly, the relationships among *α*₁, *α*₃, *α*₄*,* and *α*₅ are not limited in the embodiments, and values thereof may be completely the same, partially the same, or completely different. However, α₂ < α₃ is necessarily satisfied.

102-4, The feature vectors of all trains in the neighborhood train operation plan are converted into multi-channel data *X*(*L*_{*n*₀}) by the two-dimensional wavelet packet decomposition module.

*L*_{*n*₀} is the neighborhood train operation plan constructed in an *n*₀-th iteration.

That is, the neighborhood train operation plan *L*_{*n*₀} is input into the two-dimensional wavelet packet decomposition module in the evaluation model, and feature vectors of all trains in *L*_{*n*₀} are converted into the multi-channel data *X*(*L*_{*n*₀}) by the two-dimensional wavelet packet decomposition module.

102-5, The transportation effectiveness pre-evaluation is performed based on *X*(*L*_{*n*₀}) and the load factor of each train by the convolutional neural network, to obtain an efficiency evaluation value *Z*(*L*_{*n*₀}):
For example, the efficiency evaluation value *Z*(*L*_{*n*₀}) is obtained by the convolutional neural network using an objective function $min Z \left({L}_{{n}_{0}}\right) = 1 - {\sum }_{l ∈ {L}_{{n}_{0}}} {\sum }_{i = 1}^{h \left(l\right) - 1} {C}_{l} ⋅ {m}_{{e}_{li}} ⋅ {LF}_{l} / {\sum }_{l ∈ {L}_{{n}_{0}}} {\sum }_{i = 1}^{h \left(l\right) - 1} {C}_{l} {m}_{{e}_{li}}$ .

102-6, An evaluation difference Δ*Z = Z*(*L*_{*n*₀}) - Z(*L*') is determined.

102-7: If Δ*Z* ≤ 0, *L'* = *L*_{*n*₀} is updated, *Z(L') = Z*(*L*_{*n*₀}) is updated, *L*^{*} = *L*_{*n*₀} is updated, and *Z*(*L**) *= Z*(*L*_{*n*₀}) is updated.

If Δ*Z* > 0 and exp(-Δ*Z*/*t*₀) > Random(0,1), *L' = L*_{*n*₀} is updated and *Z*(*L*') *= Z*(*L*_{*n*₀}) is updated.

exp(·) is a natural exponential function, and *Random*(·) is a random function.

102-8, *n*₀ = *n*₀ + 1.

102-9, If determining that the termination condition is not satisfied according to *n*₀ and *t*₀, the step of constructing the neighborhood train operation plan according to *L*' (that is, step 102-3) and subsequent steps are re-executed to perform a loop. If determining that the termination condition is satisfied according to *n*₀ and *t*₀, the optimized train operation plan is determined as *L** and the transportation effectiveness evaluation value of the optimized train operation plan is determined as *Z*(*L*^{*}).

As an example, if *n*₀ ≤ *N*₀, determining that the termination condition is not satisfied, where *N*₀ is a preset total iteration number.

If *n*₀ > *N*₀, t₀ *= θ ·* t₀ is updated, and *n*₀ = 1 is updated. If *t*₀ ≥ *T*₁, determining that the termination condition is not satisfied, and if *t*₀ < *T*₁, determining that the termination condition is satisfied, where *θ* is a temperature decrease ratio, and *T*₁ is the preset termination temperature.

During specific implementation, step 102 may obtain the optimized train operation plan *L** and the transportation effectiveness evaluation value *Z*(*L*^{*}) through the evaluation model based on the railway network *G* = (*V*,*E*), the whole day operation period [*t*₁,*t*₂], the high-speed train operation plan *L*₀, the train set *L̅* of the base timetable, the upper limit *TD* of capacity allocation of the railway network, the upper limit *TCᵥ* of the starting and ending capacity of station *v*, the sum ${t}_{v}^{stop}$ of the start-stop additional time and the stop time of the train at station *v,* the lower limit ${n}_{v}^{0}$ of the service frequency, the upper limit *TCₑ* of the throughput capacity of section *e*, the accounting coefficient *ηₗ* of kilometers of train *l,* the initial temperature *T*₀, the termination temperature *T*₁, the total iteration number *N*₀, the temperature decrease ratio *θ*, and the load factor of each train.

In addition, in the method for evaluating and optimizing the transportation effectiveness of the high-speed train operation plan according to the embodiments, the high-speed train operation plan is pre-prepared, and the method only needs to directly acquire the prepared high-speed train operation plan. The formulation process of the high-speed train operation plan is as follows:

201, A full set of passenger train operation plans for a designated line or region in a next timetable period is determined.

When executing step 201, according to the pre-input passenger travel demand prediction data and combined with the passenger train operation plan of the current timetable period, the full set of passenger train operation plans for the designated line or region in the next timetable period is determined by comprehensively considering a newly added plan, a stopped plan, and an adjusted plan.

In addition, the core of formulating the high-speed train operation plan lies in how to determine whether the train operation plan set in the current state satisfies constraint conditions of a high-feasibility high-speed train operation plan validation (HHTPV) framework. The passenger trains corresponding to the train operation plan set in the current state may be divided into two categories. One category includes passenger trains that are already explicitly required to be operated and have already been plotted in a timetable. The set of such train operation plans is referred to as the fixedly operated passenger train operation plan set. For a newly built high-speed railway line, such train operation plans are mainly those determined to be executed on the high-speed railway line, such as a benchmark train executed on the line, or an important train starting from or ending at a key hub station and running via the line. Although such trains are not plotted in the timetable at the initial stage of formulating the high-speed train operation plan, due to the importance of relevant plans, execution is determined and plotting is completed at the initial stage of formulating the high-speed train operation plan. For a non-newly-built high-speed railway line, in addition to the above situations, such train operation plans mainly includes passenger train operation plans that have been plotted in the timetable and are not cancelled in a current timetable period.

The other category includes the alternative passenger train operation plan set. At the initial stage of formulating the high-speed train operation plan, such train operation plans are not plotted in the timetable, and the number of the train operation plans may be greater than the actual number of trains required to be operated and the carrying capacity of the railway network. By setting a redundant alternative train operation plan set, the iteration result of the formulation process can be more flexible, and the alternative train operation plan can be adjusted according to actual conditions in the formulation process, so as to obtain a better train operation plan.

It should be noted that, in order to more accurately implement the preference process of the train operation plan, a certain degree of redundant setting is performed on the train operation plan when establishing and initializing the alternative train operation plan set. The purpose of the redundant setting is to finely adjust the alternative train operation plan according to actual conditions in the formulation process to obtain a better comprehensive train operation plan. In practical applications, the number of redundantly set train operation plans should be reasonably set according to actual conditions, so as to ensure the flexibility and efficiency of the formulation process.

In summary, the full set of passenger train operation plans for the designated line or region in the next timetable period determined in step 201 satisfies: 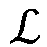 = 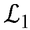 U 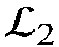 , where 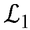 is the fixedly operated passenger train operation plan set for the designated line or region. 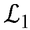 = 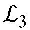 U 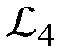 , where 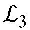 is the train set satisfying preset conditions in newly added passenger train operation plans for the designated line or region, and 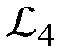 is the passenger train operation plan set that has already been plotted in the timetable for the designated line or region and is not cancelled in the current timetable period. 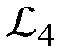 *=* 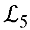 \ 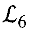 , where 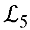 is the passenger train operation plan set for the designated line or region in the current timetable period, and 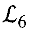 is the passenger train operation plan set planned to be stopped for the designated line or region. 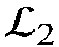 is the alternative passenger train operation plan set for the designated line or region in the next timetable period, and 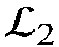 = 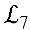 \ 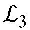 , where 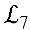 is the newly added passenger train operation plan set.

It should be noted that, in the train operation plan set of the embodiments of the present disclosure, train operation plans having identical basic operation information but different serial numbers are allowed to exist.

202, Basic constraints of the HHTPV framework are determined based on basic data of the railway network.

When executing step 202, based on the designated line or region targeted by the train operation plan formulation, and according to the pre-input basic data of the railway network, topology connectivity of the railway network is comprehensively considered, the throughput capacity of key sections and stations (sections) are inferred, basic parameters of the HHTPV framework are calculated, and basic constraints of the HHTPV framework are determined. The basic constraints are static constraints of the HHTPV framework.

Therefore, in specific implementation, the process of step 202 is as follows:
202-1, Based on the basic data of the railway network and the topological connectivity of the railway network, the upper limit of throughput capacity of sections, the upper limit of throughput capacity of stations, the limit value of stopping capacity of stations, and the quantity limit of each train type in sections are inferred.
202-2, According to the upper limit of throughput capacity of sections, the upper limit of throughput capacity of stations, the limit value of stopping capacity of stations, and the quantity limit of each train type in sections, the passing-limit constraint and the train type limit constraint for each section, and the passing-limit constraint and the stop-limit constraint for each station are determined.

### 1. Section passing-limit constraint

The passing-limit constraint of any section is 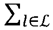 *δₗₑuₗ* ≤ *TCₑ,* where e is the section identifier, *l* is the train identifier, 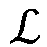 is the full set of passenger train operation plans for the designated line or region in the next timetable period, *δₗₑ* is the marking parameter indicating whether train *l* passes through section e, *uₗ* is the enabling parameter of train *l*, and *TCₑ* is the upper limit of throughput capacity of section e.

*δₗₑ* is 0 or 1, *δₗₑ =* 1 indicating that train *l* passes through section *e*, and *δₗₑ =* 0 indicating that train *l* does not pass through section e.

*uₗ* is 0 or 1, *uₗ* = 1 indicating that train *l* is not enabled, and *uₗ* = 0 indicating that train *l* is enabled.

### 2. Section train type limit constraint

The train type limit constraint of any section is: 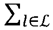 *δₗₑγₗₖuₗ* ≤ *Fₑₖ,* where *k* is the train type identifier, *γₗₖ* is the marking parameter indicating that train *l* belongs to train type *k*, and *Fₑₖ* is the quantity limit of train type *k* in section *e*.

*γₗₖ* is the train type to which train *l* belongs.

*Fₑₖ* is affected by both the train operation plan and throughput capacity constraints.

3. Station passing-limit constraint

The passing-limit constraint of any station is 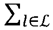 *λₗᵥuₗ* ≤ *RCᵥ,* where *v* is the station identifier, *λₗᵥ* is the marking parameter indicating whether train *l* passes through station *v*, and *RCᵥ* is the upper limit of throughput capacity of station *v*.

*λₗᵥ* is 0 or 1, *λₗᵥ* = 1 indicating that train *l* passes through station *v*, and *λₗᵥ* = 0 indicating that train *l* does not pass through station *v*.

### 4. Station stop-limit constraint

The stop-limit constraint of any station is: 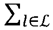 *υₗᵥ* ≤ *RSᵥ*, where *υₗᵥ* is the marking parameter indicating whether train *l* stops at station v, and *RSᵥ* is a stop-capacity limit value of station v.

*υₗᵥ* is 0 or 1, *υₗᵥ* = 1 indicating that train *l* stops at station *v*, and *υₗᵥ* = 0 indicating that train *l* does not stop at station v.

Step 201 and step 202 are the preprocessing stages for formulating the high-speed train operation plan. The basic constraints of the HHTPV framework are determined and the full set of passenger train operation plans for the designated line or region in the next timetable period is generated.

203, The HHTPV framework is initialized based on the constraint conditions.
The constraint conditions are determined according to the base constraints and the dynamic threshold constraint set.

Step 203 is the initialization process of the HHTPV framework. In step 203, the HHTPV framework is initialized according to the constraint conditions of the HHTPV framework in the current state, to complete the formulation of the HHTPV framework.

The constraint conditions include the basic constraint obtained in step 202 and the dynamic threshold constraint set obtained in step 205.

In step 205, the iterative process in the timetable coordination stage is performed, and the latest train operation constraints are obtained through the iterative process. The latest constraints constitute the continuously updated dynamic threshold constraint set.

204, The train operation plan in the current state is generated according to the preference strategy, the train operation plan preference adjustment direction and the full set of passenger train operation plans for the designated line or region in the next timetable period.

Step 204 is the train operation plan preference process. In the process, based on the pre-input preference strategy and combined with the train operation plan preference adjustment direction (the train operation plan preference adjustment direction is adjustment feedback information obtained through iterative feedback in the plan formulating stage process), the alternative passenger train operation plans in 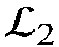 are optimized to generate the train operation plan in the current state.

In addition, the preference strategy is not limited in the embodiments, which can be determined according to actual requirements. For example, when actual requirements correspond to passenger requirements (such as minimum train stops), under the constraints satisfying passenger requirements, the preference strategy is determined as: *min* 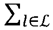 Σ_{*v*∈}*_{V} υₗᵥ*, where *l* is the train identifier, 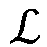 is the full set of passenger train operation plans for the designated line or region in the next timetable period, v is the station identifier, *V* is the station set of the railway network, and *υₗᵥ* is the marking parameter indicating that train *l* stops at station v.

In addition to the above preference strategy, a weighted multi-objective preference strategy may further be proposed according to the optimization objective of multiple categories of train operation plans. For example, objectives such as minimum train stops, uniform stop distribution and reasonable train type setting are simultaneously weighted as multiple objectives to form a multi-objective preference strategy. In practice, the objectives of the preference strategy have a certain complexity, and some objectives cannot be numerically quantized. In this case, a manual preference strategy may be adopted according to specific conditions, and preference selection of the train operation plan is performed by professionals according to actual conditions, so as to ensure the reasonability of the train operation plan.

Step 203 and step 204 are the plan formulation stage for formulating the high-speed train operation plan. The train operation plan of the passenger train is gradually optimized through initializing the HHTPV framework and executing iterations of the train operation plan preference process in this stage, and finally the train operation plan under the current state of the HHTPV framework is obtained.

205, The train operation plan set in the current state is validated within the HHTPV framework, and the high-speed train operation plan is prepared according to the validation result.

The validation includes constraint validation and feasibility validation. Accordingly, the implementation process of step 205 is as follows: the train operation plan set in the current state is validated within the HHTPV framework.

If the constraint validation fails:
1) A train operation plan preference adjustment direction is updated.
2) The step of generating the train operation plan in the current state according to the preference strategy, the train operation plan preference adjustment direction and the full set of passenger train operation plans for the designated line or region in the next timetable period (that is, step 204) and subsequent steps are re-executed.

If the constraint validation passes:
1) The timetable pre-plotting is performed on the train operation plan set in the current state, to generate the timetable pre-plotting result.

During timetable pre-plotting, the timetable pre-plotting is performed based on the train operation plan set in the current state generated in the plan formulation stage, to generate the timetable pre-plotting result. In order to take into account the accuracy and efficiency of timetable pre-plotting, a passenger train operation constraint model is established, and the timetable pre-plotting is automatically completed by a computer program, so as to improve the efficiency of the overall process. In specific implementation, since the pre-plotting process is used for validating high feasibility of the train operation plan, some constraint conditions of actual timetable plotting are relaxed, difficulty of timetable plotting is reduced, resource consumption in the validation process is reduced, and thus validation efficiency is improved.

2) The feasibility validation is performed based on the timetable pre-plotting result.

The feasibility validation process is implemented based on timetable conflict determination. For example, based on the timetable pre-plotting result, it is determined whether the train operation plan set in the current state is feasible.

3) If the feasibility validation fails, the dynamic threshold constraint set is updated, and the step of initializing the HHTPV framework based on the constraint conditions (that is, step 203) and subsequent steps are re-executed.

If the feasibility validation passes, the train operation plan set in the current state is determined as the prepared high-speed train operation plan.

For example, if the feasibility validation fails, new dynamic threshold constraints are generated through the timetable conflict analysis, the new dynamic threshold constraint set is formed, the new dynamic threshold constraint set is introduced into the HHTPV framework, and the plan formulation stage process is re-executed until a final high-feasibility passenger train operation plan is generated. The final high-feasibility passenger train operation plan is the prepared high-speed train operation plan.

If the feasibility validation passes, no train operation conflict exists. At this time, the train operation plan set in the current state is the high-feasibility passenger train operation plan, and the high-feasibility passenger train operation plan is the final prepared high-speed train operation plan. The high-speed train operation plan satisfies the constraint conditions of the HHTPV framework, has high feasibility, and is allowed to enter the subsequent railway passenger operation organization process, so as to provide passengers with efficient and safe travel services.

The process of updating the dynamic threshold constraint set is: The timetable conflict analysis is performed according to the timetable pre-plotting result, and the dynamic threshold constraint set is updated using 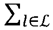 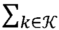 *Σ*_{*e*∈}*_{E} ε_{eq}δₗₑγₗₖO_{qk}uₗ* ≤ *RG_{q},* where *l* is the train identifier, 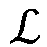 is the full set of passenger train operation plans for the designated line or region in the next timetable period, *k* is the train type identifier, 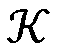 is the train type set, e is the section identifier, E is the section set of the railway network, q is the dynamic threshold constraint identifier in the dynamic threshold constraint set, *ε_{eq}* is the marking parameter indicating that dynamic threshold constraint *q* belongs to section *e*, *δₗₑ* is the marking parameter indicating that train *l* passes through section *e, γₗₖ* is the marking parameter indicating that train *l* belongs to train type *k, O_{qk}* is the weighted constraint term of dynamic threshold constraint *q* for train type *k*, *uₗ* is the enabling parameter of train *l*, and *RG_{q}* is the limit value of dynamic threshold constraint q.

*ε_{eq}* is 0 or 1, *ε_{eq} =* 1 indicating that dynamic threshold constraint *q* belongs to section *e*, and *ε_{eq}* = 0 indicating that dynamic threshold constraint *q* does not belong to the section. *ε_{eq}* is allowed to enable one constraint to manage multiple related sections, so that train conflicts managed across multiple sections are alleviated and the effective range of the constraint is expanded.

*E* ⊆ *V* × *V*, that is, sections are composed of some ordered station pairs. 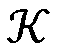 is the train type set, that is, the refined set of train categories. Refinement is allowed to be performed according to train grade, train speed, and whether a train is the benchmark train.

*O_{qk}* cooperates with the limit value *RG_{q}* of dynamic threshold constraint q, which can realize the management and control capability for multiple categories of train groupings.

The iterative updating process of the dynamic threshold constraint set in the present step is the important component of the HHTPV framework, and the core function thereof is to perform validation on the high feasibility of the train operation plan. Through the multi-grouping dynamic management and control of the carrying capacity of the train operation plan on line sections, if combined with the train operation plan preference process in step 204, a set of mathematical programming problems for optimizing passenger train operation plans may be constructed within the closed-loop iterative process of step 205, and is computed and solved. In addition, validation is performed through dynamic threshold constraints, to ensure that the high-speed train operation plan conforms to the limitations of the current constraint combination.

The dynamic threshold constraint generation process adopts a closed-loop iterative mechanism. First, timetable pre-plotting is performed based on the current train operation plan, section segments having irreconcilable conflicts are identified through a conflict detection algorithm, and then threshold dynamic adjustment is performed for problem sections, including: correcting the existing limit value parameters of the threshold constraints, adding targeted grouped threshold constraints for excluding conflicting train operation plan combinations, and clearing redundant threshold constraints generated in historical iterations. After multiple rounds of loop iteration of "plan preference, conflict detection, and threshold constraint adjustment", a high-feasibility train operation plan satisfying both transportation capacity limitations and a preference mechanism is finally generated, i.e., the high-speed train operation plan.

The constraint conditions have differentiated application characteristics in different scenarios. For a non-core line or region, feasibility determination is quickly completed by simplifying threshold parameter settings of related sections, so as to improve the plan formulation efficiency. For a core line or region, grouped constraints are refined based on dimensions such as train speed and train formation, and combination characteristics of the train operation plan are accurately controlled through multi-level threshold constraints, so as to ensure the high feasibility of the high-speed train operation plan.

After the HHTPV framework is initialized in step 203, the dynamic threshold constraint set is kept unchanged in step 204 (that is, the dynamic threshold constraint set is fixed during the train operation plan preference process of step 204), but dynamic adjustment is performed in the iterative process of step 205 based on the timetable pre-plotting result.

In addition, by adjusting *O_{qk}* such that *RG_{q}* equals 1, parameters are reduced, corresponding to a new constraint ${\sum }_{l ∈ L} {\sum }_{l ∈ K} {\sum }_{l ∈ E} {ϵ}_{eq} {δ}_{le} {γ}_{lk} \frac{{O}_{qk}}{{RG}_{q}} {u}_{l} \leq 1$. However, retaining *RG_{q}* enables the constraint to better match the physical meaning of train operation. In practical application, values of *O_{qk}* and *RG_{q}* are reasonably set according to characteristics of train types, so as to ensure the effectiveness of the constraint.

Step 205 is the timetable coordination stage of formulating the high-speed train operation plan. Through this stage, the train operation plan set in the current state may be validated according to the constraint conditions of the HHTPV framework in the current state, so as to determine whether the constraint conditions of the HHTPV framework are satisfied. If the constraint conditions are satisfied, the timetable pre-plotting stage is entered. If the constraint conditions are not satisfied, a new train operation plan preference adjustment direction is generated according to adjustment feedback information of the HHTPV framework. Step 204 and subsequent steps are re-executed until the constraint conditions of the HHTPV framework are satisfied.

In the timetable pre-plotting stage, the timetable pre-plotting is performed on the train operation plan set in the current state, and the feasibility thereof is determined. For an infeasible train operation plan, through the timetable conflict determination, a new dynamic threshold constraint set is generated and is introduced into the HHTPV framework, and step 203 and subsequent steps are re-executed until the final high-feasibility passenger train operation plan is generated. The final high-feasibility passenger train operation plan is the prepared high-speed train operation plan.

The formulation process of the high-speed train operation plan according to the embodiments may be applied to any railway network structure. However, for execution efficiency and result accuracy of formulating the high-speed train operation plan, the railway network is reasonably partitioned and converted, so that validation is targeted for train operation plans involving the designated line or region. Although railway network partitioning reduces the validation range of the HHTPV framework, the feasibility of train operation plans outside the validation range is still evaluated through the combination of static constraints and dynamic threshold constraints of the HHTPV framework.

Partitioning of the railway network is performed based on the actual conditions, so as to ensure that the partitioned railway network structure has a certain independence while effective interaction with other railway network structures is enabled. During partitioning of the railway network, the following factors are considered. First, the core line or region for train operation plan formulation is kept intact, to ensure that the train operation plan is completely and accurately validated for feasibility in the core line or region. Second, for a line connected to the core line or region but having no cross-line operation of the train operation plan, since high-feasibility validation of the train operation plan is not involved, the line is directly removed from the railway network, so as to reduce computation. Finally, for a line connected to the core line or region and having cross-line operation of the train operation plan, the simplified high-feasibility validation is performed on train operation plans involved according to the carrying capacity of the line and actual train operation conditions. Therefore, the basic connection relationship with the core line or region is kept, that is, intermediate stations on other lines in a route are removed, and connection relationships with the core line or region are established in a manner of virtual sections, to ensure the high feasibility of related train operation plans.

FIG. 3 shows a schematic diagram of the partitioning of a railway network, and "network" in FIG. 3 refers to a railway network. FIG. 3 shows the result in which the entire railway network (that is, the complete network in FIG. 3) is simplified using a line A composed of stations A1 to A7 as the core section for train operation plan formulation to generate the converted railway network (that is, the converted network in FIG. 3). Line B, line C, line D, and line E respectively represent four lines connected to line A, and the interaction between line A and other lines may be achieved through the connection between line A and other lines. For line B, when it is assumed that no train operation plan in the current timetable period or the next timetable period runs cross-line from station A4 to station B1, line B is removed in the converted network. For line C, when it is assumed that a cross-line train operation plan exists from station A5 to station C1 and station C3 and a related train operation plan finally uses station C5 as an origin and destination station, line C is reserved in the converted network, and stations C1 and C5 are reserved to completely model the related train operation plan. Since line C is not the core line for the train operation plan formulation, the structure of line C is simplified in the converted network, and only the connection relationship with line A is reserved, so as to reduce computation. In addition, in the HHTPV framework operation process, the high feasibility of cross-line train operation plans to line C is ensured through dynamic threshold constraints related to the section from station C1 to station A7 and the virtual section from station A7 to station C5. For line D and line E, when it is assumed that related train operation plans run via station D3 and use station E1 or station E5 as the origin and destination station, line D and line E are reserved in the converted network, and station D3, station E1, and station E5 are reserved, to completely model the related train operation plan. In the HHTPV framework operation process, the high feasibility of the related train operation plans is ensured by establishing dynamic threshold constraints of corresponding virtual sections.

The formulation process of the high-speed train operation plan is divided into three stages. After the preprocessing stage is performed, loop iteration is performed for the latter two stages. That is, in the pre-processing stage, passenger demand prediction data is input, the full set of passenger train operation plans is determined, basic data of the railway network is input, and basic constraints of the HHTPV framework are determined. In the formulation stage, the iteration is entered, the HHTPV framework is initialized, the preference selection of passenger train operation plans is repeatedly performed, and the train operation plan in the current state is obtained. In the timetable coordination stage, the timetable pre-plotting process is performed, and it is determined whether the train operation plan generated in the formulation stage may be plotted in the timetable. If the train operation plan is infeasible, stations or sections where conflicts are prone to occur are calculated through timetable conflict determination, and the new dynamic threshold constraint combination for high-speed trains is generated for the corresponding topology structure and is introduced into the HHTPV framework; otherwise, the formulation of the final train operation plan is completed to obtain the high-speed train operation plan.

The formulation process of the high-speed train operation plan according to embodiments of the present disclosure determines the basic constraints of the HHTPV framework based on the basic data of the railway network, initializes the HHTPV framework based on the basic constraints, validates the train operation plan set in the current state within the HHTPV framework, and determines the prepared train operation plan according to the validation result, thereby achieving the automatic validation of the train operation plan and improving the formulation efficiency.

In addition, on the basis of reasonable formulation and validation of the train operation plan, the railway passenger timetable generation can be generated, which is equivalent to full-chain optimization. The main factors considered in the railway passenger timetable generation include the following.

Passenger flow information of the current station, passenger flow heat learning is performed through the passenger flow information of the current station to obtain passenger flow heat of the current station, the local region in which the current station is located is determined, and a local heat matrix is constructed according to the passenger flow heat of other stations corresponding to the local region in which the current station is located.

Eigenvalue decomposition is performed on the local heat matrix to obtain heat learning features corresponding to the local region in which the current station is located, and an initial passenger timetable of the current station is generated through the heat learning features. In addition, the in-station scheduling coupling degree of the current station is determined through the passenger flow heat of the current station and a passenger transport adjustment ratio.

Determination of the in-station scheduling coupling degree of the current station specifically includes:
The trend value sampling is respectively performed on the passenger flow heat change trend and the passenger transport adjustment trend based on a preset coupling degree extraction period, to obtain a passenger flow heat trend value sequence and a passenger transport adjustment trend value sequence.

The coupling degree analysis is performed according to the passenger flow heat trend value sequence and the passenger transport adjustment trend value sequence after normalization, to obtain the in-station scheduling coupling degree of the current station.

In specific implementation, the coupling degree extraction period is mapped based on the current passenger flow density. In some embodiments, the coupling degree extraction period is fixed as a constant value of 6 hours, and a Pearson correlation coefficient between the passenger flow heat trend value sequence and the passenger transport adjustment trend value sequence is used as the in-station scheduling coupling degree.

Dynamic feedback updating is performed on the initial passenger timetable based on the in-station scheduling coupling degree and an inter-station scheduling coupling degree, to generate an optimized passenger timetable.

Aiming at problems of insufficient dynamic response, difficulty in multi-discipline coordination, and low computation efficiency caused by the independent operation of passenger flow prediction, train adjustment, seat allocation, and timetable formulation in conventional methods, a closed-loop process of "adjustment plan generation→timetable dynamic generation→operation evaluation-feedback optimization" is established by constructing a modular multi-discipline coordination system for passenger transport, transportation, scheduling, and rolling stock, and lightweight data interaction is implemented through standardized interfaces.

The method for evaluating and optimizing the transportation effectiveness of the high-speed train operation plan according to embodiments of the present disclosure selects the overall load factor level of the train operation plan to construct a transportation effectiveness evaluation index system based on the efficiency and benefits of both aspects of railway supply and demand, which can multi-dimensionally evaluate the transportation effectiveness of the train operation plan from aspects including service level, operation efficiency, and capacity utilization.

The evaluation model designs a two-dimensional feature matrix based on operation elements of the train operation plan, performs two-dimensional wavelet packet decomposition using a two-dimensional wavelet packet decomposition module, converts the two-dimensional wavelet packet decomposition module into multi-channel data, and performs transportation effectiveness evaluation using the convolutional neural network.

During transportation effectiveness evaluation, the overall load factor level is used as the optimization objective of the train operation plan, constraint conditions such as transport capacity allocation, transportation organization and service level are comprehensively considered, and a neighborhood train operation plan is constructed and solved according to the transportation effectiveness evaluation result.

The method for evaluating and optimizing the transportation effectiveness of the high-speed train operation plan according to embodiments of the present disclosure can improve the evaluation accuracy of transportation effectiveness of the train operation plan. The method for evaluating and optimizing the transportation effectiveness of the high-speed train operation plan according to the embodiments of the present disclosure comprehensively extracts feature elements of the train operation plan based on the historical operation big data, and deeply mines the mapping association relationships among the operation elements of train operation plans and between operation elements and transportation effectiveness, so as to realize the distribution pre-estimation of load factors of operating trains, and to improve the evaluation accuracy of transportation effectiveness of the train operation plan.

The method for evaluating and optimizing the transportation effectiveness of the high-speed train operation plan according to embodiments of the present disclosure can improve the supply-demand matching degree of the train operation plan. The method for evaluating and optimizing the transportation effectiveness of the high-speed train operation plan according to the embodiments of the present disclosure obtains the distribution of supply-demand matching degree of the train operation plan by a transportation effectiveness pre-evaluation technology of the train operation plan, designs the corresponding operation-element adjustment strategies according to the distribution of the supply-demand matching degree, and continuously optimizes the train operation plan through an iterative algorithm, so as to improve the supply-demand matching degree of the train operation plan.

The method for evaluating and optimizing the transportation effectiveness of the high-speed train operation plan according to embodiments of the present disclosure can optimizes transportation organization efficiency. The method for evaluating and optimizing the transportation effectiveness of the high-speed train operation plan according to embodiments of the present disclosure accurately and quantitatively evaluates the transportation effectiveness of the train operation plan by constructing a transportation effectiveness pre-evaluation model of the train operation plan, provides the reference basis for the optimization design of the train operation plan, and designs the optimization method of the train operation plan based thereon, so as to realize the intelligent decision-making of the train operation plan, to optimize the implementation effect of train operation, to effectively reduce manual workload, and to optimize transportation organization efficiency.

In the method for evaluating and optimizing the transportation effectiveness of the high-speed train operation plan according to the embodiments of the present disclosure, the high-speed train operation plan and a load factor of each train are acquired. An optimized train operation plan and a transportation effectiveness evaluation value of the optimized train operation plan are determined by an evaluation model according to the high-speed train operation plan and the load factor of each train. The evaluation model includes a two-dimensional wavelet packet decomposition module and a convolutional neural network. A decomposition function of the two-dimensional wavelet packet decomposition module is Daubechies4, and the two-dimensional wavelet packet decomposition module is configured to convert feature vectors of all trains in the train operation plan into multi-channel data. The convolutional neural network is configured to perform transportation effectiveness evaluation based on the multi-channel data and the load factors of each train. The convolutional neural network is trained based on a plurality of historical train operation plans and load factors of trains thereof to construct a mapping relationship for performing transportation effectiveness evaluation. According to the method of the present disclosure, the transportation effectiveness can be accurately evaluated according to the high-speed train operation plan and the load factor of each train, and the optimized train operation plan is further obtained, thereby achieving automatic optimization of transportation effectiveness evaluation of the high-speed train operation plan, and improving the optimization efficiency and accuracy.

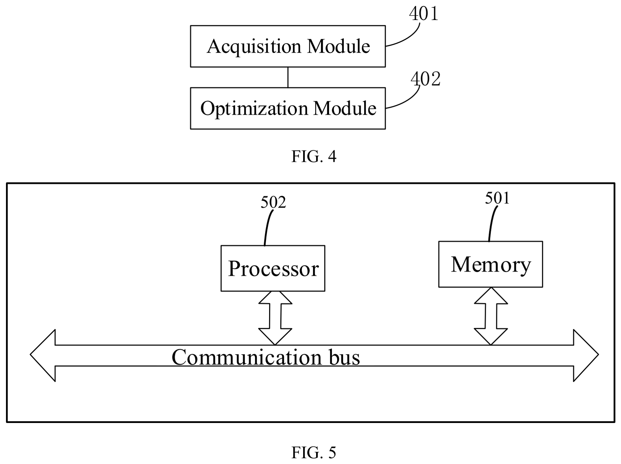

Based on the same inventive concept of the method for evaluating and optimizing the transportation effectiveness of the high-speed train operation plan, the embodiments of the present disclosure provide an apparatus for evaluating and optimizing the transportation effectiveness of the high-speed train operation plan, referring to FIG. 4, the apparatus includes an acquisition module 401 and an optimization module 402.

The acquisition module 401 is configured to acquire the high-speed train operation plan and the load factor of each train.

The optimization module 402 is configured to determine the optimized train operation plan and the transportation effectiveness evaluation value of the optimized train operation plan through the evaluation model according to the high-speed train operation plan and the load factor of each train acquired by the acquisition module 401.

The evaluation model includes a two-dimensional wavelet packet decomposition module and a convolutional neural network.

The decomposition function of the two-dimensional wavelet packet decomposition module is Daubechies4, and the two-dimensional wavelet packet decomposition module is configured to convert feature vectors of all trains in the train operation plan into multi-channel data.

The convolutional neural network is configured to perform transportation effectiveness evaluation based on the multi-channel data and the load factors of each train.

The convolutional neural network is trained based on a plurality of historical train operation plans and load factors of trains thereof to construct a mapping relationship for performing transportation effectiveness evaluation.

The optimization module 402 is configured to convert, by the two-dimensional wavelet packet decomposition module, the feature vectors of all trains in the high-speed train operation plan into multi-channel data *X*(*L*₀), where *L*₀ is the high-speed train operation plan.

The transportation effectiveness pre-evaluation is performed based on *X*(*L*₀) and the load factor of each train by the convolutional neural network, to obtain an efficiency evaluation value *Z*(*L*₀). The current solution is set as *L*' = *L*₀, the objective value of the current solution is set as *Z*(*L*') = *Z*(*L*₀), the optimal solution is set as *L*^{*} = *L*₀, the objective value of the optimal solution is set as *Z*(*L*^{*}) = *Z*(*L*₀), the iteration number is set as *n*₀ = 1, and the current temperature is set as *t*₀ *= T*₀, where *T*₀ is the preset initial temperature.

The neighborhood train operation plan is constructed according to *L*'.

The feature vectors of all trains in the neighborhood train operation plan are converted into multi-channel data *X*(*L*_{*n*₀}) by the two-dimensional wavelet packet decomposition module. *L*_{*n*₀} is the neighborhood train operation plan constructed in an *n*₀-th iteration.

The transportation effectiveness pre-evaluation is performed based on *X*(*L*_{*n*₀}) and the load factor of each train by the convolutional neural network, to obtain an efficiency evaluation value *Z*(*L*_{*n*₀}).

An evaluation difference Δ*Z* = *Z*(*L*_{*n*₀}) *- Z*(*L*') is determined.

If Δ*Z* ≤ 0, *L'* = *L*_{*n*₀} is updated, *Z*(*L*') = *Z*(*L*_{*n*₀}) is updated, *L** = *L*_{*n*₀} is updated, and *Z*(*L**) *= Z*(*L*_{*n*₀}) is updated. If Δ*Z* > 0 and exp(-Δ*Z*/*t*₀) > *Random*(0,1), *L'* = *L*_{*n*₀} is updated and *Z(L') = Z*(*L*_{*n*₀}) is updated, where exp(·) is a natural exponential function, and *Random*(·) is a random function.${n}_{0} = {n}_{0} + 1 .$

If determining that the termination condition is not satisfied according to *n*₀ and *t*₀, the step of constructing the neighborhood train operation plan according to *L*' and subsequent steps are re-executed. If determining that the termination condition is satisfied according to *n*₀ and *t*₀, the optimized train operation plan is determined as *L*^{*} and the transportation effectiveness evaluation value of the optimized train operation plan is determined as *Z*(*L*^{*}).

The neighborhood train operation plan is constructed according to *L*', including:
The following processing is performed on the target train in *L*' to obtain the neighborhood train operation plan.

A first target train in *L*' is deleted. The first target train is the single-unit train, and has the load factor lower than *α*₁, and *α*₁ is a preset first ratio value.

A second target train in *L*' is adjusted to a long-formation train having the smaller capacity with the probability of *β*₁, where *β*₁ is the preset first probability value. The second target train is a long-formation train or a coupled train, and has load factors within [*α*₂, *α*₃], where *α*₂ is a preset second ratio value, *α*₃ is a preset third ratio value, and *α*₂ *< α*₃.

A third target train in *L*' is adjusted to a single-unit train with a probability of *β*₂, where *β*₂ is the preset second probability value, and *β*₂ > *β*₁. The third target train is a long-formation train or a coupled train, and has load factors all lower than *α*₂.

A train corresponding to the fourth target train in *L*' is added. The fourth target train is a long-formation train, a coupled train, or a short-formation train that is incapable of performing formation increase, and has a load factor higher than *α*₄, where *α*₄ is a preset fourth ratio value. In addition, a peak line train pair corresponding to the high utilization section of the fourth target train exists at the adjacent time point in the base timetable.

The intermediate arrival and departure times of a fifth target train in *L*' are adjusted. The intermediate stations of the fifth target train include a target station, and the target station satisfies the service frequency constraint. The service frequency constraint is: ${\sum }_{l ∈ L} {σ}_{v}^{l} \geq {n}_{v}^{0}$, where *l* is a train identifier, *L* is a train operation plan, ${n}_{v}^{0}$ is the lower limit of service frequency of station *v*, ${σ}_{v}^{l}$ is the association identifier between train *l* and station *v*, ${σ}_{v}^{l} = 1$ when train *l* stops at station *v*, and ${σ}_{v}^{l} = 0$ when train *l* does not stop at station *v*.

The operation section of a sixth target train in *L'* is adjusted according to the section throughput capacity constraint. The sixth target train has the load factor lower than α₅, and α₅ is a preset fifth ratio value. The section throughput capacity constraint is: *NTₑ* ≤ *TCₑ*, where e is a section identifier, *e* ∈ *E, E* is the section set of the railway network, *NTₑ* is the number of trains entering section *e* in the whole day, and *TCₑ* is the upper limit of throughput capacity of section *e*.

The objective function during the transportation effectiveness evaluation is: $min Z \left(L\right) = 1 - {\sum }_{l ∈ L} {\sum }_{i = 1}^{h \left(l\right) - 1} {C}_{l} ⋅ {m}_{{e}_{li}} ⋅ {LF}_{l} / {\sum }_{l ∈ L} {\sum }_{i = 1}^{h \left(l\right) - 1} {C}_{l} {m}_{{e}_{li}}$, where *l* is a train identifier, *L* is the train operation plan, *Z*(*L*) is an objective value of *L*, *h*(*l*) is a total number of stations passed by train *l, i* is a station identifier passed by train *l, Cₗ* is a capacity of train *l, m_{eₗᵢ}* is a mileage of a section *eₗᵢ, e* is a section identifier, *eₗᵢ* is a section of train *l* corresponding to an i-th station, ${e}_{li} = \left({v}_{i}^{l}, {v}_{i + 1}^{l}\right)$, *v* is a station identifier, ${v}_{i}^{l}$ is an i-th station along an operation route of train *l* in the train operation plan, ${v}_{i + 1}^{l}$ is an (i+1)-th station along the operation route of train *l* in the train operation plan, and *LFₗ* is the load factor of train *l*.

Constraint conditions during the transportation effectiveness pre-evaluation include: a capacity allocation constraint, a section throughput capacity constraint, a station starting and ending train number constraint, a base timetable constraint, a starting and ending time constraint, a train capacity constraint, and a service frequency constraint.

The capacity allocation constraint is: ${\sum }_{l ∈ L} {\sum }_{i = 1}^{h \left(l\right) - 1} {m}_{{e}_{li}} {η}_{l} \leq TD$*,* where is the accounting coefficient of kilometers of train *l*, and *TD* is the upper limit of capacity allocation of the railway network.

The section throughput capacity constraint is: *NTₑ* ≤ *TCₑ*, where *e* ∈ *E*, *E* is the section set of the railway network, *NTₑ* is the number of trains entering section *e* in the whole day, and *TCₑ* is the upper limit of throughput capacity of section *e*.

The station starting and ending train number constraint is: $\left|\left\{\left.l∈L\right|v={v}_{1}^{l}\right\}\right| \leq {TC}_{v}$ and $\left|\left\{\left.l∈L\right|v={v}_{h \left(l\right)}^{l}\right\}\right| \leq {TC}_{v}$, where *v* ∈ *V*, *V* is the station set of the railway network, ${v}_{1}^{l}$ is a first station along an operation route of train *l* in the train operation plan, ${v}_{h \left(l\right)}^{l}$ is an *h*(*l*)-th station along the operation route of train *l* in the train operation plan, and *TCᵥ* is an upper limit of starting and ending capacity of station *v*.

The base timetable constraint is: *l* ∈ *L̅*, where *L̅* is the train set of the base timetable, and *l* ∈ *L*.

The starting and ending time constraint is *t*₁ ≤ *Dₗ,* ${a}_{h \left(l\right)}^{l} \leq {t}_{2}$, where *t*₁ is the start time of the whole-day operation period, *t*₂ is the end time of the whole-day operation period, *l* ∈ *L*, *Dₗ* is the departure time of train *l*, and ${a}_{h \left(l\right)}^{l}$ is the arrival time of train *l* at the *h*(*l*)-th station.

The train capacity constraint is: *Cₗ* E *C̅*, where *C̅* is the capacity set of equipped train types, and *l* ∈ *L*.

The service frequency constraint is: ${\sum }_{l ∈ L} {σ}_{v}^{l} \geq {n}_{v}^{0}$, where ${n}_{v}^{0}$ is the lower limit of service frequency of station *v*, ${σ}_{v}^{l}$ is the association identifier between train *l* and station *v*, and ${σ}_{v}^{l} = 1$ when train *l* stops at station v, otherwise ${σ}_{v}^{l} = 0$.

If *n*₀ ≤ *N*₀, determining that the termination condition is not satisfied, where *N*₀ is a preset total iteration number.

If *n*₀ > *N*₀, t₀ = *θ · t*₀ is updated, and n₀ = 1 is updated. If *t*₀ ≥ *T*₁, determining that the termination condition is not satisfied, and if *t*₀ *< T*₁, determining that the termination condition is satisfied, where *θ* is a temperature decrease ratio, and *T*₁ is the preset termination temperature.

The convolutional neural network includes: an input layer, a hidden layer, and an output layer.

The hidden layer includes: a convolutional layer, a pooling layer, and a fully connected layer.

The convolution layer includes three convolution layers, each convolution layer has a 3×3 convolution kernel, and an activation function is a rectified linear unit.

A pooling function of the pooling layer is an average pooling function.

A loss function of the convolutional neural network is a mean square error function, and an optimization function is an Adam algorithm.

The formulation process of the high-speed train operation plan includes: a full set of passenger train operation plans for a designated line or region in a next timetable period is determined.

Basic constraints of a HHTPV framework are determined based on basic data of a high-speed railway network.

The HHTPV framework is initialized based on constraint conditions. The constraint conditions are determined according to the base constraints and a dynamic threshold constraint set.

A train operation plan in the current state is generated according to a preference strategy, a train operation plan preference adjustment direction and the full set of passenger train operation plans for the designated line or region in the next timetable period.

A train operation plan set in the current state is validated within the HHTPV framework, and the high-speed train operation plan is prepared according to a validation result.

On the basis of reasonable formulation and validation of the train operation plan, the railway passenger timetable generation can be generated, which is equivalent to full-chain optimization. The main factors considered in the railway passenger timetable generation include the following:
Passenger flow information of the current station, passenger flow heat learning is performed through the passenger flow information of the current station to obtain passenger flow heat of the current station, the local region in which the current station is located is determined, and a local heat matrix is constructed according to the passenger flow heat of other stations corresponding to the local region in which the current station is located.

Eigenvalue decomposition is performed on the local heat matrix to obtain heat learning features corresponding to the local region in which the current station is located, and an initial passenger timetable of the current station is generated through the heat learning features. In addition, the in-station scheduling coupling degree of the current station is determined through the passenger flow heat of the current station and a passenger transport adjustment ratio.

Determination of the in-station scheduling coupling degree of the current station specifically includes:
The trend value sampling is respectively performed on the passenger flow heat change trend and the passenger transport adjustment trend based on a preset coupling degree extraction period, to obtain a passenger flow heat trend value sequence and a passenger transport adjustment trend value sequence.

The coupling degree analysis is performed according to the passenger flow heat trend value sequence and the passenger transport adjustment trend value sequence after normalization, to obtain the in-station scheduling coupling degree of the current station.

In specific implementation, the coupling degree extraction period is mapped based on the current passenger flow density. In some embodiments, the coupling degree extraction period is fixed as a constant value of 6 hours, and a Pearson correlation coefficient between the passenger flow heat trend value sequence and the passenger transport adjustment trend value sequence is used as the in-station scheduling coupling degree.

Dynamic feedback updating is performed on the initial passenger timetable based on the in-station scheduling coupling degree and an inter-station scheduling coupling degree, to generate an optimized passenger timetable.

Aiming at problems of insufficient dynamic response, difficulty in multi-discipline coordination, and low computation efficiency caused by the independent operation of passenger flow prediction, train adjustment, seat allocation, and timetable formulation in conventional methods, a closed-loop process of "adjustment plan generation→timetable dynamic generation→operation evaluation-feedback optimization" is established by constructing a modular multi-discipline coordination system for passenger transport, transportation, scheduling, and rolling stock, and lightweight data interaction is implemented through standardized interfaces.

According to the device of the present disclosure, the transportation effectiveness can be accurately evaluated according to the high-speed train operation plan and the load factor of each train, and the optimized train operation plan is further obtained, thereby achieving automatic optimization of transportation effectiveness evaluation of the high-speed train operation plan, and thus improving the optimization efficiency and accuracy.

Based on the same inventive concept of the method for evaluating and optimizing the transportation effectiveness of the high-speed train operation plan, embodiments of the present disclosure provide an electronic device, as shown in FIG. 5, and the electronic device includes: a memory 501, a processor 502, and a computer program.

The computer program is stored in the memory 501 and configured to be executed by the processor 502 to implement the method for evaluating and optimizing the transportation effectiveness of the high-speed train operation plan described above.

In embodiments of the present disclosure, the high-speed train operation plan and a load factor of each train are acquired.

An optimized train operation plan and a transportation effectiveness evaluation value of the optimized train operation plan are determined by an evaluation model according to the high-speed train operation plan and the load factor of each train.

The evaluation model includes a two-dimensional wavelet packet decomposition module and a convolutional neural network.

The decomposition function of the two-dimensional wavelet packet decomposition module is Daubechies4, and the two-dimensional wavelet packet decomposition module is configured to convert feature vectors of all trains in the train operation plan into multi-channel data.

The convolutional neural network is configured to perform transportation effectiveness evaluation based on the multi-channel data and the load factors of each train.

The convolutional neural network is trained based on a plurality of historical train operation plans and load factors of trains thereof to construct a mapping relationship for performing transportation effectiveness evaluation.

Determination of the optimized high-speed train operation plan and the transportation effectiveness evaluation value of the optimized high-speed train operation plan through the evaluation model according to the high-speed train operation plan and the load factor of each train includes:

The feature vectors of all trains of the high-speed train operation plan are converted into multi-channel data *X*(*L*₀) by the two-dimensional wavelet packet decomposition module, where *L*₀ is the high-speed train operation plan.

The transportation effectiveness pre-evaluation is performed based on *X*(*L*₀) and the load factor of each train by the convolutional neural network, to obtain an efficiency evaluation value *Z*(*L*₀). The current solution is set as *L*' = *L*₀, the objective value of the current solution is set as *Z*(*L*') = *Z*(*L*₀), the optimal solution is set as *L*^{*} = *L*₀, the objective value of the optimal solution is set as *Z*(*L*^{*}) = *Z*(*L*₀), the iteration number is set as *n*₀ = 1, and the current temperature is set as *t*₀ *= T*₀*,* where T₀ is the preset initial temperature.

The neighborhood train operation plan is constructed according to *L*'.

The feature vectors of all trains in the neighborhood train operation plan are converted into multi-channel data *X*(*L*_{*n*₀}) by the two-dimensional wavelet packet decomposition module. *L*_{*n*₀} is the neighborhood train operation plan constructed in an *n*₀-th iteration.

The transportation effectiveness pre-evaluation is performed based on *Z*(*L*_{*n*₀}) and the load factor of each train by the convolutional neural network, to obtain an efficiency evaluation value *Z*(*L*_{*n*₀})*.*

An evaluation difference Δ*Z* = *Z*(*L*_{*n*₀}) *- Z(L')* is determined.

If Δ*Z* ≤ 0, *L'* = *L*_{*n*₀} is updated, *Z(L') = Z*(*L*_{*n*₀}) is updated, *L** = *L*_{*n*₀} is updated, and *Z*(*L**) *= Z*(*L*_{*n*₀}) is updated. If Δ*Z* > 0 and exp(-ΔZ/*t*₀) > *Random*(0,1), *L*' = *L*_{*nz*₀} is updated and *Z*(*L*') *= Z*(*L*_{*n*₀}) is updated, where exp(·) is a natural exponential function, and *Random*(·) is a random function.${n}_{0} = {n}_{0} + 1 .$

If determining that the termination condition is not satisfied according to *n*₀ and *t*₀, the step of constructing the neighborhood train operation plan according to *L*' and subsequent steps are re-executed. If determining that the termination condition is satisfied according to *n*₀ and *t*₀, the optimized train operation plan is determined as *L*^{*} and the transportation effectiveness evaluation value of the optimized train operation plan is determined as *Z*(*L*^{*}).

The neighborhood train operation plan is constructed according to *L*', including:
The following processing is performed on the target train in *L*' to obtain the neighborhood train operation plan.

A first target train in *L*' is deleted. The first target train is the single-unit train, and has the load factor lower than *α*₁, and *α*₁ is a preset first ratio value.

A second target train in *L*' is adjusted to a long-formation train having the smaller capacity with the probability of *β*₁, where *β*₁ is the preset first probability value. The second target train is a long-formation train or a coupled train, and has load factors within [*α*₂, *α*₃], where *α*₂ is a preset second ratio value, *α*₃ is a preset third ratio value, and *α*₂ < *α₃.*

A third target train in *L*' is adjusted to a single-unit train with a probability of *β*₂, where *β*₂ is the preset second probability value, and *β*₂ > *β*₁. The third target train is a long-formation train or a coupled train, and has load factors all lower than *α*₂.

A train corresponding to the fourth target train in *L*' is added. The fourth target train is a long-formation train, a coupled train, or a short-formation train that is incapable of performing formation increase, and has a load factor higher than *α*₄, where *α*₄ is a preset fourth ratio value. In addition, a peak line train pair corresponding to the high utilization section of the fourth target train exists at the adjacent time point in the base timetable.

The intermediate arrival and departure times of a fifth target train in *L*' are adjusted. The intermediate stations of the fifth target train include a target station, and the target station satisfies the service frequency constraint. The service frequency constraint is: ${\sum }_{l ∈ L} {σ}_{v}^{l} \geq {n}_{v}^{0}$*,* where *l* is a train identifier, *L* is a train operation plan, ${n}_{v}^{0}$ is the lower limit of service frequency of station *v*, ${σ}_{v}^{l}$ is the association identifier between train *l* and station *v*, ${σ}_{v}^{l} = 1$ when train *l* stops at station v, and ${σ}_{v}^{l} = 0$ when train *l* does not stop at station *v.*

The operation section of a sixth target train in *L'* is adjusted according to the section throughput capacity constraint. The sixth target train has the load factor lower than α₅, and α₅ is a preset fifth ratio value. The section throughput capacity constraint is: *NTₑ* ≤ *TCₑ*, where *e* is a section identifier, *e* ∈ *E*, *E* is the section set of the railway network, *NTₑ* is the number of trains entering section e in the whole day, and *TCₑ* is the upper limit of throughput capacity of section *e*.

The objective function during the transportation effectiveness evaluation is: $min Z \left(L\right) = 1 - {\sum }_{l ∈ L} {\sum }_{i = 1}^{h \left(l\right) - 1} {C}_{l} ⋅ {m}_{{e}_{li}} ⋅ {LF}_{l} / {\sum }_{l ∈ L} {\sum }_{i = 1}^{h \left(l\right) - 1} {C}_{l} {m}_{{e}_{li}}$, where *l* is a train identifier, *L* is the train operation plan, *Z*(*L*) is an objective value of *L*, *h*(*l*) is a total number of stations passed by train *l*, *i* is a station identifier passed by train *l, Cₗ* is a capacity of train *l*, *m_{eₗᵢ}* is a mileage of a section *eₗᵢ*, *e* is a section identifier, *eₗᵢ* is a section of train *l* corresponding to an i-th station, ${e}_{li} = \left({v}_{i}^{l}, {v}_{i + 1}^{l}\right)$, *v* is a station identifier, ${v}_{i}^{l}$ is an i-th station along an operation route of train *l* in the train operation plan, ${v}_{i + 1}^{l}$, is an (i+1)-th station along the operation route of train *l* in the train operation plan, and *LFₗ* is the load factor of train *l*.

Constraint conditions during the transportation effectiveness pre-evaluation include: a capacity allocation constraint, a section throughput capacity constraint, a station starting and ending train number constraint, a base timetable constraint, a starting and ending time constraint, a train capacity constraint, and a service frequency constraint.

The capacity allocation constraint is: ${\sum }_{l ∈ L} {\sum }_{i = 1}^{h \left(l\right) - 1} {m}_{{e}_{li}} {η}_{l} \leq TD$*,* where *ηₗ* is the accounting coefficient of kilometers of train *l*, and *TD* is the upper limit of capacity allocation of the railway network.

The section throughput capacity constraint is: *NTₑ* ≤ *TCₑ,* where *e* ∈ *E*, *E* is the section set of the railway network, *NTₑ* is the number of trains entering section e in the whole day, and *TCₑ* is the upper limit of throughput capacity of section *e*.

The station starting and ending train number constraint is: $\left|\left\{\left.l∈L\right|v={v}_{1}^{l}\right\}\right| \leq {TC}_{v}$ and $\left|\left\{\left.l∈L\right|v={v}_{h \left(l\right)}^{l}\right\}\right| \leq {TC}_{v}$*,* where *v* ∈ *V, V* is the station set of the railway network, ${v}_{1}^{l}$ is a first station along an operation route of train *l* in the train operation plan, ${v}_{h \left(l\right)}^{l}$ is an *h*(*l*)-th station along the operation route of train *l* in the train operation plan, and *TCᵥ* is an upper limit of starting and ending capacity of station *v*.

The base timetable constraint is: *l* ∈ *L̅*, where *L̅* is a train set of a base timetable, and *l* ∈ *L.*

The starting and ending time constraint is *t*₁ ≤ *Dₗ,* ${a}_{h \left(l\right)}^{l} \leq {t}_{2}$, where *t*₁ is the start time of the whole-day operation period, *t*₂ is the end time of the whole-day operation period, *l* ∈ *L*, *Dₗ* is the departure time of train *l*, and ${a}_{h \left(l\right)}^{l}$ is the arrival time of train *l* at the *h*(*l*)-th station.

The train capacity constraint is: *Cₗ* ∈ *C̅*, where *C̅* is the capacity set of equipped train types, and *l* ∈ L.

The service frequency constraint is: ${\sum }_{l ∈ L} {σ}_{v}^{l} \geq {n}_{v}^{0}$, where ${n}_{v}^{0}$ is the lower limit of service frequency of station v, ${σ}_{v}^{l}$ is the association identifier between train *l* and station *v*, and ${σ}_{v}^{l} = 1$ when train *l* stops at station v, otherwise ${σ}_{v}^{l} = 0$.

If n₀ ≤ *N*₀, determining that the termination condition is not satisfied, where *N*₀ is a preset total iteration number.

If *n*₀ > *N*₀, t₀ *= θ · t*₀ is updated, and *n*₀ = 1 is updated. If *t*₀ ≥ *T*₁, determining that the termination condition is not satisfied, and if *t*₀ *< T*₁, determining that the termination condition is satisfied, where *θ* is a temperature decrease ratio, and *T*₁ is the preset termination temperature.

The convolutional neural network includes: an input layer, a hidden layer, and an output layer.

The hidden layer includes: a convolutional layer, a pooling layer, and a fully connected layer.

The convolution layer includes three convolution layers, each convolution layer has a 3×3 convolution kernel, and an activation function is a rectified linear unit.

A pooling function of the pooling layer is an average pooling function.

A loss function of the convolutional neural network is a mean square error function, and an optimization function is an Adam algorithm.

The formulation process of the high-speed train operation plan includes: a full set of passenger train operation plans for a designated line or region in a next timetable period is determined.

Basic constraints of a HHTPV framework are determined based on basic data of a high-speed railway network.

The HHTPV framework is initialized based on constraint conditions. The constraint conditions are determined according to the base constraints and a dynamic threshold constraint set.

A train operation plan in the current state is generated according to a preference strategy, a train operation plan preference adjustment direction and the full set of passenger train operation plans for the designated line or region in the next timetable period.

A train operation plan set in the current state is validated within the HHTPV framework, and the high-speed train operation plan is prepared according to a validation result.

On the basis of reasonable formulation and validation of the train operation plan, the railway passenger timetable generation can be generated, which is equivalent to full-chain optimization. The main factors considered in the railway passenger timetable generation include the following:
Passenger flow information of the current station, passenger flow heat learning is performed through the passenger flow information of the current station to obtain passenger flow heat of the current station, the local region in which the current station is located is determined, and a local heat matrix is constructed according to the passenger flow heat of other stations corresponding to the local region in which the current station is located.

Eigenvalue decomposition is performed on the local heat matrix to obtain heat learning features corresponding to the local region in which the current station is located, and an initial passenger timetable of the current station is generated through the heat learning features. In addition, the in-station scheduling coupling degree of the current station is determined through the passenger flow heat of the current station and a passenger transport adjustment ratio.

Determination of the in-station scheduling coupling degree of the current station specifically includes:
The trend value sampling is respectively performed on the passenger flow heat change trend and the passenger transport adjustment trend based on a preset coupling degree extraction period, to obtain a passenger flow heat trend value sequence and a passenger transport adjustment trend value sequence.

The coupling degree analysis is performed according to the passenger flow heat trend value sequence and the passenger transport adjustment trend value sequence after normalization, to obtain the in-station scheduling coupling degree of the current station.

In specific implementation, the coupling degree extraction period is mapped based on the current passenger flow density. In some embodiments, the coupling degree extraction period is fixed as a constant value of 6 hours, and a Pearson correlation coefficient between the passenger flow heat trend value sequence and the passenger transport adjustment trend value sequence is used as the in-station scheduling coupling degree.

Dynamic feedback updating is performed on the initial passenger timetable based on the in-station scheduling coupling degree and an inter-station scheduling coupling degree, to generate an optimized passenger timetable.

Aiming at problems of insufficient dynamic response, difficulty in multi-discipline coordination, and low computation efficiency caused by the independent operation of passenger flow prediction, train adjustment, seat allocation, and timetable formulation in conventional methods, a closed-loop process of "adjustment plan generation-timetable dynamic generation→operation evaluation→feedback optimization" is established by constructing a modular multi-discipline coordination system for passenger transport, transportation, scheduling, and rolling stock, and lightweight data interaction is implemented through standardized interfaces.

According to the electronic device provided by embodiments of the present disclosure, the computer program on the computer-readable storage medium is executed by the processor to accurately evaluate the transportation effectiveness according to the high-speed train operation plan and the load factor of each train, so that the optimized train operation plan is obtained, thereby achieving automatic optimization of transportation effectiveness evaluation of the high-speed train operation plan, and thus improving the optimization efficiency and accuracy.

Based on the same inventive concept of the method for evaluating and optimizing the transportation effectiveness of the high-speed train operation plan, the embodiments of the present disclosure provide a computer-readable storage medium on which a computer program is stored. The computer program is executed by the processor to implement the method for evaluating and optimizing the transportation effectiveness of the high-speed train operation plan described above.

In embodiments of the present disclosure, the high-speed train operation plan and a load factor of each train are acquired.

An optimized train operation plan and a transportation effectiveness evaluation value of the optimized train operation plan are determined by an evaluation model according to the high-speed train operation plan and the load factor of each train.

The evaluation model includes a two-dimensional wavelet packet decomposition module and a convolutional neural network.

The decomposition function of the two-dimensional wavelet packet decomposition module is Daubechies4, and the two-dimensional wavelet packet decomposition module is configured to convert feature vectors of all trains in the train operation plan into multi-channel data.

The convolutional neural network is configured to perform transportation effectiveness evaluation based on the multi-channel data and the load factors of each train.

The convolutional neural network is trained based on a plurality of historical train operation plans and load factors of trains thereof to construct a mapping relationship for performing transportation effectiveness evaluation.

Determining the optimized high-speed train operation plan and the transportation effectiveness evaluation value of the optimized high-speed train operation plan through the evaluation model according to the high-speed train operation plan and the load factor of each train includes: the feature vectors of all trains of the high-speed train operation plan are converted into multi-channel data *X*(*L*₀) by the two-dimensional wavelet packet decomposition module, where L₀ is the high-speed train operation plan.

The transportation effectiveness pre-evaluation is performed based on *X*(*L*₀) and the load factor of each train by the convolutional neural network, to obtain an efficiency evaluation value *Z*(*L*₀). The current solution is set as *L*' = *L*₀, the objective value of the current solution is set as *Z*(*L*') = *Z*(*L*₀)*,* the optimal solution is set as *L^{*}* = *L*₀, the objective value of the optimal solution is set as *Z*(*L*^{*}) = *Z*(*L*₀), the iteration number is set as *n*₀ = 1, and the current temperature is set as t₀ *= T*₀, where *T*₀ is the preset initial temperature.

The neighborhood train operation plan is constructed according to *L*'.

The feature vectors of all trains in the neighborhood train operation plan are converted into multi-channel data *X*(*L*_{*n*₀}) by the two-dimensional wavelet packet decomposition module. *L*_{*n*₀} is the neighborhood train operation plan constructed in an *n*₀-th iteration.

The transportation effectiveness pre-evaluation is performed based on *X*(*L*_{*n*₀}) and the load factor of each train by the convolutional neural network, to obtain an efficiency evaluation value *Z*(*L*_{*n*₀}).

An evaluation difference Δ*Z* = *Z*(*L*_{*n*₀}) *- Z*(*L*') is determined.

If Δ*Z* ≤ 0, *L*' = *L*_{*n*₀} is updated, *Z*(*L*') *= Z*(*L*_{*n*₀}) is updated, *L** = *L*_{*n*₀} is updated, and *Z*(*L**) *= Z*(*L*_{*n*₀}) is updated. If Δ*Z* > 0 and exp(-Δ*Z*/*t*₀) > *Random*(0,1), *L*' = *L*_{*n*₀} is updated and *Z*(*L*') *= Z*(*L*_{*n*₀}) is updated, where exp(·) is a natural exponential function, and *Random*(·) is a random function.${n}_{0} = {n}_{0} + 1 .$

If determining that the termination condition is not satisfied according to *n*₀ and *t*₀, the step of constructing the neighborhood train operation plan according to *L*' and subsequent steps are re-executed. If determining that the termination condition is satisfied according to *n*₀ and *t*₀, the optimized train operation plan is determined as *L*^{*} and the transportation effectiveness evaluation value of the optimized train operation plan is determined as *Z*(*L*^{*}).

The neighborhood train operation plan is constructed according to *L*', including:
The following processing is performed on the target train in L' to obtain the neighborhood train operation plan.

A first target train in L' is deleted. The first target train is the single-unit train, and has the load factor lower than α₁, and α₁ is a preset first ratio value.

A second target train in L' is adjusted to a long-formation train having the smaller capacity with the probability of *β*₁, where *β*₁ is the preset first probability value. The second target train is a long-formation train or a coupled train, and has load factors within [α*₂,* α₃]*,* where α₂ is a preset second ratio value, α₃ is a preset third ratio value, and α₂ *<* α₃.

A third target train in L' is adjusted to a single-unit train with a probability of *β*₂, where *β*₂ is the preset second probability value, and *β*₂ > *β*₁. The third target train is a long-formation train or a coupled train, and has load factors all lower than *α*₂*.*

A train corresponding to the fourth target train in L' is added. The fourth target train is a long-formation train, a coupled train, or a short-formation train that is incapable of performing formation increase, and has a load factor higher than *α*₄*,* where *α*₄ is a preset fourth ratio value. In addition, a peak line train pair corresponding to the high utilization section of the fourth target train exists at the adjacent time point in the base timetable.

The intermediate arrival and departure times of a fifth target train in L' are adjusted. The intermediate stations of the fifth target train include a target station, and the target station satisfies the service frequency constraint. The service frequency constraint is: ${\sum }_{l ∈ L} {σ}_{v}^{l} \geq {n}_{v}^{0}$, where *l* is a train identifier, *L* is a train operation plan, ${n}_{v}^{0}$ is the lower limit of service frequency of station *v*, ${σ}_{v}^{l}$ is the association identifier between train *l* and station *v*, ${σ}_{v}^{l} = 1$ when train *l* stops at station v, and ${σ}_{v}^{l} = 0$ when train *l* does not stop at station *v.*

The operation section of a sixth target train in L' is adjusted according to the section throughput capacity constraint. The sixth target train has the load factor lower than α₅, and α₅ is a preset fifth ratio value. The section throughput capacity constraint is: *NTₑ* ≤ *TCₑ,* where e is a section identifier, e ∈ *E, E* is the section set of the railway network, *NTₑ* is the number of trains entering section e in the whole day, and *TCₑ* is the upper limit of throughput capacity of section e.

The objective function during the transportation effectiveness evaluation is: $min Z \left(L\right) = 1 - {\sum }_{l ∈ L} {\sum }_{i = 1}^{h \left(l\right) - 1} {C}_{l} ⋅ {m}_{{e}_{li}} ⋅ {LF}_{l} / {\sum }_{l ∈ L} {\sum }_{i = 1}^{h \left(l\right) - 1} {C}_{l} {m}_{{e}_{li}}$, where *l* is the train identifier, *L* is the train operation plan, *Z(L)* is an objective value of *L, h*(*l*) is a total number of stations passed by train *l, i* is a station identifier passed by train *l,*

*Cₗ* is a capacity of train *l, m_{eₗᵢ}* is a mileage of a section *eₗᵢ,* e is a section identifier, *eₗᵢ* is a section of train *l* corresponding to an i-th station, ${e}_{li} = \left({v}_{i}^{l}, {v}_{i + 1}^{l}\right)$*, v* is a station identifier, ${v}_{i}^{l}$ is an i-th station along an operation route of train *l* in the train operation plan, ${v}_{i + 1}^{l}$ is an (i+1)-th station along the operation route of train *l* in the train operation plan, and *LFₗ* is the load factor of train *l*.

Constraint conditions during the transportation effectiveness pre-evaluation include: a capacity allocation constraint, a section throughput capacity constraint, a station starting and ending train number constraint, a base timetable constraint, a starting and ending time constraint, a train capacity constraint, and a service frequency constraint.

The capacity allocation constraint is: ${\sum }_{l ∈ L} {\sum }_{i = 1}^{h \left(l\right) - 1} {m}_{{e}_{li}} {η}_{l} \leq TD$, where *ηₗ* is the accounting coefficient of kilometers of train *l,* and *TD* is the upper limit of capacity allocation of the railway network.

The section throughput capacity constraint is: *NTₑ* ≤ *TCₑ,* where e ∈ *E, E* is the section set of the railway network, *NTₑ* is the number of trains entering section e in the whole day, and *TCₑ* is the upper limit of throughput capacity of section e.

The station starting and ending train number constraint is: $\left|\left\{\left.l∈L\right|v={v}_{1}^{L}\right\}\right| \leq {TC}_{v}$ and $\left|\left\{\left.l∈L\right|v={v}_{h \left(l\right)}^{l}\right\}\right| \leq {TC}_{v}$*,* where v ∈ *V, V* is the station set of the railway network, ${v}_{1}^{l}$ is a first station along an operation route of train *l* in the train operation plan, ${v}_{h \left(l\right)}^{l}$ is an *h*(*l*)-th station along the operation route of train *l* in the train operation plan, and *TCᵥ* is an upper limit of starting and ending capacity of station v.

The base timetable constraint is: *l* ∈ *L̅*, where *L̅* is a train set of a base timetable, and *l* E L.

The starting and ending time constraint is ${t}_{1} \leq {D}_{l} , {a}_{h \left(l\right)}^{l} \leq {t}_{2}$, where *t*₁ is the start time of the whole-day operation period, *t*₂ is the end time of the whole-day operation period, *l* ∈ *L, Dₗ* is the departure time of train *l,* and ${a}_{h \left(l\right)}^{l}$ is the arrival time of train *l* at the *h*(*l*)-th station.

The train capacity constraint is: *Cₗ* E *C̅*, where *C̅* is the capacity set of equipped train types, and *l* E L.

The service frequency constraint is: ${\sum }_{l ∈ L} {σ}_{v}^{l} \geq {n}_{v}^{0}$, where ${n}_{v}^{0}$ is the lower limit of service frequency of station *v,* ${σ}_{v}^{l}$ is the association identifier between train *l* and station v, and ${σ}_{v}^{l} = 1$ when train *l* stops at station v, otherwise ${σ}_{v}^{l} = 0$.

If *n*₀ ≤ *N*₀, determining that the termination condition is not satisfied, where *N*₀ is a preset total iteration number.

If *n*₀ *> N*₀ , *t*₀ *= θ ·* t₀ is updated, and *n*₀ = 1 is updated. If *t*₀ ≥ *T*₁ *,* determining that the termination condition is not satisfied, and if *t*₀ *< T*₁*,* determining that the termination condition is satisfied, where *θ* is a temperature decrease ratio, and *T*₁ is the preset termination temperature.

The convolutional neural network includes: an input layer, a hidden layer, and an output layer.

The hidden layer includes: a convolutional layer, a pooling layer, and a fully connected layer.

The convolution layer includes three convolution layers, each convolution layer has a 3×3 convolution kernel, and an activation function is a rectified linear unit.

A pooling function of the pooling layer is an average pooling function.

A loss function of the convolutional neural network is a mean square error function, and an optimization function is an Adam algorithm.

The formulation process of the high-speed train operation plan includes: a full set of passenger train operation plans for a designated line or region in a next timetable period is determined.

Basic constraints of a HHTPV framework are determined based on basic data of a high-speed railway network.

The HHTPV framework is initialized based on constraint conditions. The constraint conditions are determined according to the base constraints and a dynamic threshold constraint set.

A train operation plan in the current state is generated according to a preference strategy, a train operation plan preference adjustment direction and the full set of passenger train operation plans for the designated line or region in the next timetable period.

A train operation plan set in the current state is validated within the HHTPV framework, and the high-speed train operation plan is prepared according to a validation result.

On the basis of reasonable formulation and validation of the train operation plan, the railway passenger timetable generation can be generated, which is equivalent to full-chain optimization. The main factors considered in the railway passenger timetable generation include the following.

Passenger flow information of the current station, passenger flow heat learning is performed through the passenger flow information of the current station to obtain passenger flow heat of the current station, the local region in which the current station is located is determined, and a local heat matrix is constructed according to the passenger flow heat of other stations corresponding to the local region in which the current station is located.

Eigenvalue decomposition is performed on the local heat matrix to obtain heat learning features corresponding to the local region in which the current station is located, and an initial passenger timetable of the current station is generated through the heat learning features. In addition, the in-station scheduling coupling degree of the current station is determined through the passenger flow heat of the current station and a passenger transport adjustment ratio.

Determination of the in-station scheduling coupling degree of the current station specifically includes:
The trend value sampling is respectively performed on the passenger flow heat change trend and the passenger transport adjustment trend based on a preset coupling degree extraction period, to obtain a passenger flow heat trend value sequence and a passenger transport adjustment trend value sequence.

The coupling degree analysis is performed according to the passenger flow heat trend value sequence and the passenger transport adjustment trend value sequence after normalization, to obtain the in-station scheduling coupling degree of the current station.

In specific implementation, the coupling degree extraction period is mapped based on the current passenger flow density. In some embodiments, the coupling degree extraction period is fixed as a constant value of 6 hours, and a Pearson correlation coefficient between the passenger flow heat trend value sequence and the passenger transport adjustment trend value sequence is used as the in-station scheduling coupling degree.

Dynamic feedback updating is performed on the initial passenger timetable based on the in-station scheduling coupling degree and an inter-station scheduling coupling degree, to generate an optimized passenger timetable.

Aiming at problems of insufficient dynamic response, difficulty in multi-discipline coordination, and low computation efficiency caused by the independent operation of passenger flow prediction, train adjustment, seat allocation, and timetable formulation in conventional methods, a closed-loop process of "adjustment plan generation→timetable dynamic generation→operation evaluation-feedback optimization" is established by constructing a modular multi-discipline coordination system for passenger transport, transportation, scheduling, and rolling stock, and lightweight data interaction is implemented through standardized interfaces.

According to the computer-readable storage medium provided by embodiments of the present disclosure, the computer program on the computer-readable storage medium is executed by the processor to accurately evaluate the transportation effectiveness according to the high-speed train operation plan and the load factor of each train, so that the optimized train operation plan is obtained, thereby achieving automatic optimization of transportation effectiveness evaluation of the high-speed train operation plan, and improving the optimization efficiency and accuracy.

Those skilled in the art should understand that the embodiments of the present disclosure may be provided as a method, a system, or a computer program product. Accordingly, the present disclosure may take the form of an entirely hardware embodiment, an entirely software embodiment, or an embodiment combining software and hardware. In addition, the present disclosure may take the form of a computer program product implemented on one or more computer usable storage media (including but not limited to magnetic disk storage, CD-ROM, optical storage, etc.) containing computer usable program code. The solutions in the embodiments of the present disclosure may be implemented in various computer languages, for example, an object-oriented programming language Java, an interpreted scripting language JavaScript, and the like.

The present disclosure is described with reference to flowcharts and/or blocks of methods, devices (systems), and computer program products according to the embodiments of the present disclosure. It should be understood that each flow and/or block of the flowcharts and/or block diagrams or combinations thereof can be achieved by computer program instructions. These computer program instructions can be provided to a processor of a general purpose computer, a dedicated computer, an embedded processor, or other programmable data processing device to produce a machine, so that an apparatus for implementing functions specified in one or more processes of the flowcharts and/or one or more blocks of the block diagrams can be generated by the processor of the computer or another programmable data processing device.

These computer program instructions can also be stored in a computer-readable memory that can guide a computer or other programmable data processing device to operate in a specific manner, so that the instructions stored in the computer-readable memory generate manufactured articles including instruction means which implement functions specified in one or more processes of the flowcharts and/or one or more blocks of the block diagrams.

These computer program instructions can also be loaded to a computer or other programmable data processing device, so that a series of operation steps are executed on the computer or other programmable device to generate the computer-implemented process, and thus the instructions executed on the computer or the other programmable device provide steps for implementing functions specified in one or more processes of the flowcharts and/or one or more blocks of the block diagrams.

In addition, the terms "first" and "second" are merely used for descriptive purposes, and should not be understood as indicating or implying relative importance or implicitly indicating the quantity of the indicated technical features. Therefore, the features defined by "first" and "second" can indicate or imply to include one or more of the features. In the description of the present disclosure, "a plurality of" means at least two, for example, two, three, and the like, unless specifically defined otherwise.

Although the preferred embodiments of the present disclosure have been described, those skilled in the art benefiting from the underlying inventive concept can make other changes and modifications to these embodiments.

It is appreciated that, those skilled in the art may make various changes and variations to the present disclosure without departing from the spirit and scope of the present disclosure. Accordingly, if such changes and variations of the present disclosure fall within the scope of the claims of the present disclosure and equivalent technologies thereof, the present disclosure is also intended to encompass such changes and variations.

## Claims

1. A method for evaluating and optimizing transportation effectiveness of a high-speed train operation plan, comprising:
acquiring the high-speed train operation plan and a load factor of each train; and
determining an optimized train operation plan and a transportation effectiveness evaluation value of the optimized train operation plan through an evaluation model according to the high-speed train operation plan and the load factor of each train,
wherein the evaluation model comprises a two-dimensional wavelet packet decomposition module and a convolutional neural network,
wherein a decomposition function of the two-dimensional wavelet packet decomposition module is Daubechies4, and the two-dimensional wavelet packet decomposition module is configured to convert feature vectors of all trains in the train operation plan into multi-channel data,
wherein the convolutional neural network is configured to perform transportation effectiveness evaluation based on the multi-channel data and the load factors of each train, and
wherein the convolutional neural network is trained based on a plurality of historical train operation plans and load factors of trains thereof to construct a mapping relationship for performing transportation effectiveness evaluation.

2. The method according to claim 1, wherein said determining an optimized train operation plan and a transportation effectiveness evaluation value of the optimized train operation plan through an evaluation model according to the high-speed train operation plan and the load factor of each train comprises:
converting, by the two-dimensional wavelet packet decomposition module, the feature vectors of all trains in the high-speed train operation plan into multi-channel data *X*(*L*₀), where *L*₀ is the high-speed train operation plan;
performing, by the convolutional neural network, transportation effectiveness pre-evaluation based on *X*(*L*₀) and the load factor of each train, to obtain an efficiency evaluation value *Z*(*L*₀); and determining a current solution L' = *L*₀, determining an objective value of the current solution *Z(L')* = *Z*(*L*₀), determining an optimal solution *L** = *L*₀, determining an objective value of the optimal solution Z(L*) = *Z*(*L*₀), determining an iteration number *n*₀ = 1, and determining a current temperature *t*₀ *= T*₀*,* where *T*₀ is a preset initial temperature;
constructing a neighborhood train operation plan according to L';
converting, by the two-dimensional wavelet packet decomposition module, feature vectors of all trains in the neighborhood train operation plan into multi-channel data *X*(*L*_{*n*₀})*,* where *L*_{*n*₀} is the neighborhood train operation plan constructed in an *n*₀-th iteration;
performing, by the convolutional neural network, transportation effectiveness pre-evaluation based on *X*(*L*_{*n*₀}) and the load factor of each train, to obtain an efficiency evaluation value *Z*(*L*_{*n*₀});
determining an evaluation difference *ΔZ* = *Z*(*L*_{*n*₀}) *- Z(L');*
when ΔZ ≤ 0, updating *L'* = *L*_{*n*₀}*,* updating *Z(L')* = *Z*(*L*_{*n*₀})*,* updating *L** = *L*_{*n*₀}*,* and updating *Z(L*)* = *Z*(*L*_{*n*₀})*;* and when Δ*Z* > 0 and exp(-Δ*Z*/*t*₀) > *Random(0,1),* updating *L'* = *L*_{*n*₀}*,* and updating *Z(L') = Z*(*L*_{*n*₀})*,* where exp(·) is a natural exponential function, and *Random*(*·*) is a random function; ${n}_{0} = {n}_{0} + 1 ;$ and
when determining that a termination condition is not satisfied according to *n*₀ and *t*₀, re-executing a step of constructing the neighborhood train operation plan according to L' and subsequent steps; and when determining that the termination condition is satisfied according to *n*₀ and *t*₀, determining the optimized train operation plan as *L** and the transportation effectiveness evaluation value of the optimized train operation plan as *Z(L*).*

3. The method according to claim 2, wherein said constructing a neighborhood train operation plan according to L' comprises:
performing following processing on a target train in L' to obtain the neighborhood train operation plan:
deleting a first target train in L', wherein the first target train is a single-unit train, and has a load factor lower than α₁, where α₁ is a preset first ratio value;
adjusting a second target train in L' to a long-formation train having a smaller capacity with a probability of *β*₁, where *β*₁ is a preset first probability value, the second target train is a long-formation train or a coupled train, and a load factor of the second target train is within [*α*₂*, α*₃]*,* where α₂ is a preset second ratio value, *α*₃ is a preset third ratio value, and α₂ *< α*₃;
adjusting a third target train in L' to a single-unit train with a probability value of *β*₂, where *β*₂ is a preset second probability value and *β*₂ > *β*₁, and the third target train is a long-formation train or a coupled train and has a load factor lower than α₂;
adding a train corresponding to a fourth target train in L', wherein the fourth target train is a long-formation train, a coupled train, or a short-formation train that is incapable of performing formation increase, and has a load factor higher than *α*₄*,* where *α*₄ is a preset fourth ratio value, and a peak line train pair corresponding to a high utilization section of the fourth target train exists at an adjacent time point in a base timetable;
adjusting intermediate arrival and departure times of a fifth target train in L', wherein intermediate stations of the fifth target train comprise a target station, and the target station satisfies a service frequency constraint, and the service frequency constraint is ${\sum }_{l ∈ L} {σ}_{v}^{l} \geq {n}_{v}^{0}$ *,* where *l* is a train identifier, *L* is a train operation plan, ${n}_{v}^{0}$ is a lower limit of service frequency of station v, ${σ}_{v}^{l}$ is an association identifier between train *l* and station v, and ${σ}_{v}^{l} = 1$ when train *l* stops at station *v,* otherwise ${σ}_{v}^{l} = 0$; and
adjusting an operation section of a sixth target train in L' according to a section throughput capacity constraint, wherein the sixth target train has a load factor lower than α₅, where α₅ is a preset fifth ratio value, and the section throughput capacity constraint is *NTₑ* ≤ *TCₑ,* where e is a section identifier and e ∈ *E, E* is a section set of a railway network, *NTₑ* is a number of trains entering section e in a whole day, and *TCₑ* is an upper limit of throughput capacity of section e.

4. The method according to claim 1, wherein an objective function during the transportation effectiveness evaluation is:
$min Z \left(L\right) = 1 - {\sum }_{l ∈ L} {\sum }_{i = 1}^{h \left(l\right) - 1} {C}_{l} ⋅ {m}_{{e}_{li}} ⋅ {LF}_{l} / {\sum }_{l ∈ L} {\sum }_{i = 1}^{h \left(l\right) - 1} {C}_{l} {m}_{{e}_{li}}$, where *l* is a train identifier, *L* is the train operation plan, *Z(L)* is an objective value of *L, h*(*l*) is a total number of stations passed by train *l,* i is a station identifier passed by train *l, Cₗ* is a capacity of train *l, m_{eₗᵢ}* is a mileage of a section *eₗᵢ, e* is a section identifier, *eₗᵢ* is a section of train *l* corresponding to an i-th station, ${e}_{li} = \left({v}_{i}^{l}, {v}_{i + 1}^{l}\right)$*, v* is a station identifier, ${v}_{i}^{l}$ is an i-th station along an operation route of train *l* in the train operation plan, ${v}_{i + 1}^{l}$ is an (i+1)-th station along the operation route of train *l* in the train operation plan, and *LFₗ* is the load factor of train *l*; and
constraint conditions during the transportation effectiveness pre-evaluation comprise: a capacity allocation constraint, a section throughput capacity constraint, a station starting and ending train number constraint, a base timetable constraint, a starting and ending time constraint, a train capacity constraint, and a service frequency constraint,
wherein the capacity allocation constraint is: ${\sum }_{l ∈ L} {\sum }_{i = 1}^{h \left(l\right) - 1} {m}_{{e}_{li}} {η}_{l} \leq TD$, where *ηₗ* is an accounting coefficient of kilometers of train *l,* and *TD* is an upper limit of capacity allocation of a railway network,
the section throughput capacity constraint is: *NTₑ* ≤ *TCₑ,* where *e* ∈ *E, E* is a section set of the railway network, *NTₑ* is a number of trains entering section e in a whole day, and *TCₑ* is an upper limit of throughput capacity of section e,
the station starting and ending train number constraint is: $\left|\left\{\left.l∈L\right|v={v}_{1}^{l}\right\}\right| \leq {TC}_{v}$*,* and $\left|\left\{\left.l∈L\right|v={v}_{h \left(l\right)}^{l}\right\}\right| \leq {TC}_{v}$*,* where v ∈ *V, V* is the station set of the railway network, ${v}_{1}^{l}$ is a first station along an operation route of train *l* in the train operation plan, ${v}_{h \left(l\right)}^{l}$ is an *h*(*l*)-th station along the operation route of train *l* in the train operation plan, and *TCᵥ* is an upper limit of starting and ending capacity of station v,
the base timetable constraint is: *l* ∈ *L̅*, where *L̅* is a train set of a base timetable, and *l* ∈ *L,*
the starting and ending time constraint is *t*₁ ≤ *Dₗ,* ${a}_{h \left(l\right)}^{l} \leq {t}_{2}$, where *t*₁ is a start time of a whole-day operation period, *t*₂ is an end time of the whole-day operation period, *l* E *L, Dₗ* is a departure time of train *l,* and ${a}_{h \left(l\right)}^{l}$ is an arrival time of train *l* at the *h*(*l*)-th station,
the train capacity constraint is: *Cₗ* ∈ *C̅*, where *C̅* is a capacity set of equipped train types, and *l* ∈ L, and
the service frequency constraint is: ${\sum }_{l ∈ L} {σ}_{v}^{l} \geq {n}_{v}^{0}$, where ${n}_{v}^{0}$ is a lower limit of service frequency of station *v*, ${σ}_{v}^{l}$ is an association identifier between train *l* and station v, and ${σ}_{v}^{l} = 1$ when train *l* stops at station v, otherwise ${σ}_{v}^{l} = 0$.

5. The method according to claim 2, wherein when *n*₀ ≤ *N*₀, determining that the termination condition is not satisfied, where *N*₀ is a preset total iteration number; and
when *n*₀ > *N*₀, updating *t*₀ *= θ · t*₀, and updating *n*₀ = 1; when *t*₀ *≥ T*₁*,* determining that the termination condition is not satisfied, and when *t*₀ *< T*₁*,* determining that the termination condition is satisfied, where *θ* is a temperature decrease ratio, and *T*₁ is a preset termination temperature.

6. The method according to claim 1 or 2, wherein the convolutional neural network comprises: an input layer, a hidden layer, and an output layer,
wherein the hidden layer comprises: a convolutional layer, a pooling layer, and a fully connected layer,
wherein the convolution layer comprises three convolution layers, each convolution layer has a 3×3 convolution kernel, and an activation function is a rectified linear unit,
wherein a pooling function of the pooling layer is an average pooling function, and
wherein a loss function of the convolutional neural network is a mean square error function, and an optimization function is an Adam algorithm.

7. The method according to claim 1, wherein a formulation process of the high-speed train operation plan comprises:
determining a full set of passenger train operation plans for a designated line or region in a next timetable period;
determining basic constraints of a high-feasibility high-speed train operation plan validation (HHTPV) framework based on basic data of a high-speed railway network;
initializing the HHTPV framework based on constraint conditions, wherein the constraint conditions are determined according to the base constraints and a dynamic threshold constraint set;
generating a train operation plan in a current state according to a preference strategy, a train operation plan preference adjustment direction and the full set of passenger train operation plans for the designated line or region in the next timetable period; and
validating a train operation plan set in the current state within the HHTPV framework, and formulating the high-speed train operation plan according to a validation result.

8. An apparatus for evaluating and optimizing transportation effectiveness of a high-speed train operation plan, comprising:
an acquisition module configured to acquire the high-speed train operation plan and a load factor of each train; and
an optimization module, configured to determine an optimized train operation plan and a transportation effectiveness evaluation value of the optimized train operation plan through an evaluation model according to the high-speed train operation plan and the load factor of each train,
wherein the evaluation model comprises a two-dimensional wavelet packet decomposition module and a convolutional neural network,
wherein a decomposition function of the two-dimensional wavelet packet decomposition module is Daubechies4, and the two-dimensional wavelet packet decomposition module is configured to convert feature vectors of all trains in the train operation plan into multi-channel data,
wherein the convolutional neural network is configured to perform transportation effectiveness evaluation based on the multi-channel data and the load factors of each train, and
wherein the convolutional neural network is trained based on a plurality of historical train operation plans and load factors of trains thereof to construct a mapping relationship for performing transportation effectiveness evaluation.

9. An electronic device, comprising:
a memory;
a processor; and
a computer program,
wherein the computer program is stored in the memory and configured to be executed by the processor to implement the method according to any one of claims 1 to 7.

10. A computer-readable storage medium on which a computer program is stored, wherein the computer program, when executed by a processor, is configured to implement the method according to any one of claims 1 to 7.
